# EUROPEAN PATENT APPLICATION

(11) **EP 1 424 785 A2**
(43) Date of publication of application: **02.06.2004**
(21) Application number: 03257367.7
(22) Date of filing: 21.11.2003
(51) Int. Cl.: H04B 1/707

(54) **Spread spectrum communication device**

(30) Priority: 26.11.2002 JP 2002341961
(71) Applicant: FUJITSU LIMITED, Kawasaki-shi, Kanagawa 211-8588 (JP); NTT DoCoMo, Inc., Tokyo 100-6150 (JP)
(72) Inventor: Tomiyoshi,Norio.FJ Mobile Core Tech.co,LTD, Kawasaki-shi Kanagawa 211-8588 (JP); Uchishima,Makoto.FJ Mobile Core Tech.Co,Ltd., Kawasaki-shi Kanagawa 211-8588 (JP)
(74) Representative: Stebbing, Timothy Charles

(57) **Abstract**

A communication device (10a) measures delay profiles by changing a measurement period and a measurement time to appropriate values according to measurement conditions so as to improve transmission quality. A measurement-period holding unit (11a) holds for measurement of delay profiles values of the measurement period in correspondence with values indicating one or a combination of a wireless condition or a service quality level. For example, the wireless condition indicates the number of spreading codes, and the service quality level indicates reception quality. A change recognition unit (12a) recognizes a change in at least one of the wireless condition and the service quality level, and notifies a measurement-period acquisition unit (13a) of the change. The measurement-period acquisition unit acquires from the measurement-period holding unit a value of the measurement period corresponding to the change. A delay-profile measurement unit (14a) repeats the measurement of the delay profiles with the measurement period determined by the acquired value.

## Description

### BACKGROUND OF THE INVENTION

### 1) Field of the Invention

The present invention relates to a communication device which receives spread-spectrum wireless signals.

### 2) Description of the Related Art

Recently, the number of subscribers to mobile communication services such as mobile telephone services is explosively increasing. In addition, use of the mobile telephones is not limited to only voice communications, and it is becoming more important to use the mobile telephones as terminals which have complex functions and are advanced in functions for cooperation with the Internet. Therefore, development toward multimedia services is expected in the field of mobile communications.

In the above circumstances, although the number of subscribers to multimedia communication systems are expected to further increase, and an enormous amount of data is transmitted in the multimedia communications, the multiple access systems such as FDMA (Frequency Division Multiple Access) and TDMA (Time Division Multiple Access) cannot cope with the further increased subscribers and the enormous amount of data in the multimedia communications. In order to solve this problem, CDMA (Code Division Multiple Access) systems have been developed as a next-generation wireless access system. According to CDMA, each transmitter converts an original signal into a spread-spectrum signal by using a spreading code and then transmits the spread-spectrum signals, and each receiver can reproduce the original signal by despreading the spread-spectrum signal, i.e., by multiplying the received spread-spectrum signal by the spreading code which is used by the transmitter, in such a manner that the spreading code synchronizes with the received spread-spectrum signal.

In the case of FDMA, when a user is using a frequency, the other users cannot use the frequency. On the other hand, in the case of CDMA, each user can be identified by the above spreading code, and therefore a plurality of users can perform communications by using an identical frequency without interference. Thus, it is possible to increase frequency utilization efficiency.

In addition, in the case of TDMA, when a user is using a time interval, the other users cannot use the time interval. On the other hand, in the case of CDMA, each user can be identified by the above spreading code, and therefore a plurality of users can perform communications during an identical time interval without interference. Thus, it is possible to increase utilization efficiency of the time interval.

Currently, standardization of IMT-2000 (International Mobile Telecommunications 2000) for a next-generation mobile communication system is in progress, and some services in accordance with IMT-2000 have been started. The basic technology of IMT-2000 is the spread-spectrum technology, and the RAKE reception method is adopted. According to the RAKE receiver method, each RAKE receiver collects and utilizes electromagnetic waves which reach from various directions after reflections and scatterings, and therefore transmission quality is improved.

In each RAKE receiver, timing information necessary for despreading is required to be obtained by measuring delay profiles of the above electromagnetic waves and detecting delay times in respective paths. In addition, in the case where the RAKE receiver is portable, it is necessary to reduce power consumption and prevent imposing of a load on other functions.

Conventionally, a technique for measuring a delay profile has been proposed, for example, as disclosed in Japanese Unexamined Patent Application No. 2000-278176. According to the technique, it is possible to suppress the operating speed of an averaging circuit and reduce power consumption by intermittently producing average delay profiles when a predetermined change is not detected.

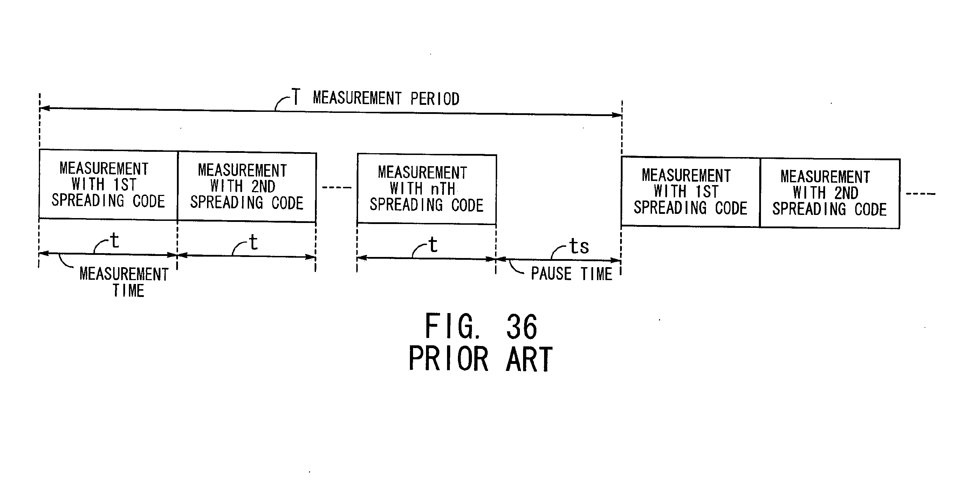

In the measurement of the delay profiles, a measurement period and a measurement time are set. FIG. 36 is a diagram illustrating a measurement period and a measurement time in the conventional technique for measurement of delay profiles. The measurement period is a period of repetition of measurement of a delay profile with each spreading code, and the measurement time is a time necessary for performing an operation of measurement of a delay profile with a single spreading code. In FIG. 36, the measurement period T is a sum of n times the measurement time t and a measurement pause time ts, where the measurement time t is a time in which an operation of measurement with each of the first to nth spreading codes is performed.

In the above delay profile measurement, the power consumption in the receiver can be reduced by increasing the measurement pause time so as to lengthen the measurement period. On the other hand, in a situation in which quality deterioration can occur, e.g., in the case where a mobile terminal can move fast, it is necessary to shorten the measurement period. That is, the measurement period is required to be set in consideration of the balance between reduction of power consumption and enduring of reception quality. In the conventional measurement of delay profiles, in order to reduce power consumption, a minimum necessary time width is fixedly set as the measurement period.

However, according to the conventional measurement of delay profiles, for example, when the number of spreading codes with which the delay profile measurement is to be performed increases or decreases, it is impossible to measure delay profiles with all of the spreading codes within the fixed measurement period. Therefore, transmission quality deteriorates.

Further, according to the technique disclosed in Japanese Unexamined Patent Application No. 2000-278176, only variations in a moving speed of a mobile terminal are considered. In addition, although delay profiles are periodically outputted by obtaining correlations, power consumption is reduced by thinning out the averaging processing.

That is, variations in the wireless conditions are not considered in the conventional technique. Therefore, the conventional technique cannot effectively cope with increase in the number of spreading codes or the like. In particular, periodical production of delay profiles makes coping with the increased spreading codes difficult.

As described above, according to the conventional technique, it is impossible to flexibly change the time utilization rate of the circuit for measuring delay profiles, where the time utilization rate is determined by, for example, a measurement period, a measurement time, a pause time, and the like.

### SUMMARY OF THE INVENTION

The present invention is made in view of the above problems, and the object of the present invention is to provide a communication device which measures delay profiles so as to improve transmission quality by changing the measurement period and the measurement time to appropriate values according to conditions for measurement of the delay profiles.

In order to accomplish the above object, a communication device is provided for performing wireless communication. The communication device comprises: a measurement-period holding unit which holds for measurement of delay profiles values of a measurement period in correspondence with values indicating one or a combination of a wireless condition or a service quality level; a change recognition unit which recognizes a change in at least one of the wireless condition and the service quality level, and notifies a measurement-period acquisition unit of the change; the measurement-period acquisition unit which acquires from the measurement-period holding unit a value of the measurement period corresponding to the change of which the measurement-period acquisition unit is notified by the change recognition unit; and a delay-profile measurement unit which repeats the measurement of the delay profiles with the measurement period determined by the value acquired by the measurement-period acquisition unit during a time which is necessary and appropriate for the measurement.

The above and other objects, features and advantages of the present invention will become apparent from the following description when taken in conjunction with the accompanying drawings which illustrate preferred embodiment of the present invention by way of example.

### BRIEF DESCRIPTION OF THE DRAWINGS

In the drawings:
FIG. 1 is a diagram illustrating a basic construction of the communication device according to the present invention;
FIG. 2 is a diagram for explaining a code spread method;
FIG. 3 is a diagram illustrating a measurement period and a measurement time for a delay profile;
FIG. 4 is a diagram illustrating a construction of a communication device in a first embodiment of the present invention;
FIG. 5 is a diagram illustrating a management table in the first embodiment;
FIG. 6 is a diagram illustrating a state before the number of spreading codes increases or decreases in the first embodiment;
FIG. 7 is a diagram illustrating a state in the first embodiment in which the number of spreading codes is increased, and the measurement period is not changed;
FIG. 8 is a diagram illustrating a state in the first embodiment in which the number of spreading codes is increased, and the measurement period is changed;
FIG. 9 is a diagram illustrating a state in the first embodiment in which the number of spreading codes is decreased, and the measurement period is not changed;
FIG. 10 is a diagram illustrating a state in the first embodiment in which the number of spreading codes is decreased, and the measurement period is changed;
FIG. 11 is a diagram illustrating a communication device in a second embodiment of the present invention;
FIG. 12 is a diagram illustrating a management table in the second embodiment;
FIG. 13 is a diagram illustrating a state before the measurement time increases or decreases in the second embodiment;
FIG. 14 is a diagram illustrating a state in the second embodiment in which the measurement time is increased, and the measurement period is not changed;
FIG. 15 is a diagram illustrating a state in the second embodiment in which the measurement time is increased, and the measurement period is changed;
FIG. 16 is a diagram illustrating a state in the second embodiment in which the measurement time is decreased, and the measurement period is not changed;
FIG. 17 is a diagram illustrating a state in the second embodiment in which the measurement time is decreased, and the measurement period is changed;
FIG. 18 is a diagram illustrating a communication device in a third embodiment of the present invention;
FIG. 19 is a diagram illustrating a management table in the third embodiment;
FIG. 20 is a diagram illustrating a communication device in a fourth embodiment of the present invention;
FIG. 21 is a diagram illustrating a management table in the fourth embodiment;
FIG. 22 is a diagram illustrating a state before the number of spreading codes increases or decreases in the fourth embodiment;
FIG. 23 is a diagram illustrating a state in the fourth embodiment in which the number of spreading codes is increased, and the measurement time is not changed;
FIG. 24 is a diagram illustrating a state in the fourth embodiment in which the number of spreading codes is increased, and the measurement time is changed;
FIG. 25 is a diagram illustrating a state in the fourth embodiment in which the number of spreading codes is decreased, and the measurement time is not changed;
FIG. 26 is a diagram illustrating a state in the fourth embodiment in which the number of spreading codes is decreased, and the measurement time is changed;
FIG. 27 is a diagram illustrating a communication device in a fifth embodiment of the present invention;
FIG. 28 is a diagram illustrating a management table in the fifth embodiment;
FIG. 29 is a diagram illustrating a state before the measurement period increases or decreases in the fifth embodiment;
FIG. 30 is a diagram illustrating a state in the fifth embodiment in which the measurement period is increased, and the measurement time is not changed;
FIG. 31 is a diagram illustrating a state in the fifth embodiment in which the measurement period is increased, and the measurement time is changed;
FIG. 32 is a diagram illustrating a state in the fifth embodiment in which the measurement period is decreased, and the measurement time is not changed;
FIG. 33 is a diagram illustrating a state in the fifth embodiment in which the measurement period is decreased, and the measurement time is changed;
FIG. 34 is a diagram illustrating a communication device in a sixth embodiment of the present invention;
FIG. 35 is a diagram illustrating a management table in the sixth embodiment; and
FIG. 36 is a diagram illustrating a measurement period and a measurement time in the conventional technique for measurement of delay profiles.

### DESCRIPTION OF THE PREFERRED EMBODIMENTS

Embodiments of the present invention are explained below with reference to drawings.

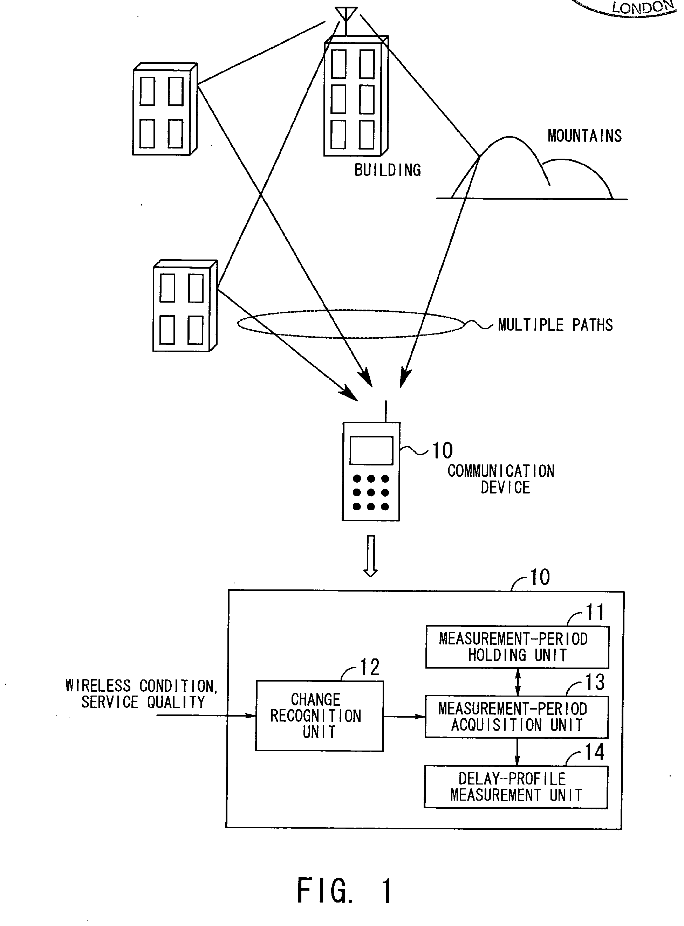

FIG. 1 is a diagram illustrating a basic construction of the communication device according to the present invention. The communication device 10 is a mobile communication device, such as a mobile telephone, which performs wireless communications under a multipath environment.

The measurement-period holding unit 11 holds values of a measurement period (for delay profile measurement) in correspondence with values indicating one or a combination of a wireless condition and a service quality level. Specifically, the measurement-period holding unit 11 holds values of the measurement period in correspondence with values of the number of spreading codes with which delay profiles are to be measured, which is a wireless condition. Alternatively, the measurement-period holding unit 11 holds values of the measurement period (for delay profile measurement) in correspondence with values of the measurement time (for delay profile measurement), which is determined according to the service quality level.

The change recognition unit 12 recognizes a change in the wireless condition or the service quality level, and makes a notification of the change. Specifically, the change recognition unit 12 recognizes an increase or decrease in the number of spreading codes as a change in the wireless condition, and notifies a measurement-period acquisition unit 13 of the increase or decrease in the number of spreading codes. Alternatively, the change recognition unit 12 recognizes an increase or decrease in the measurement time (for delay profile measurement) as a change in the service quality level, and notifies the measurement-period acquisition unit 13 of the increase or decrease in the measurement time.

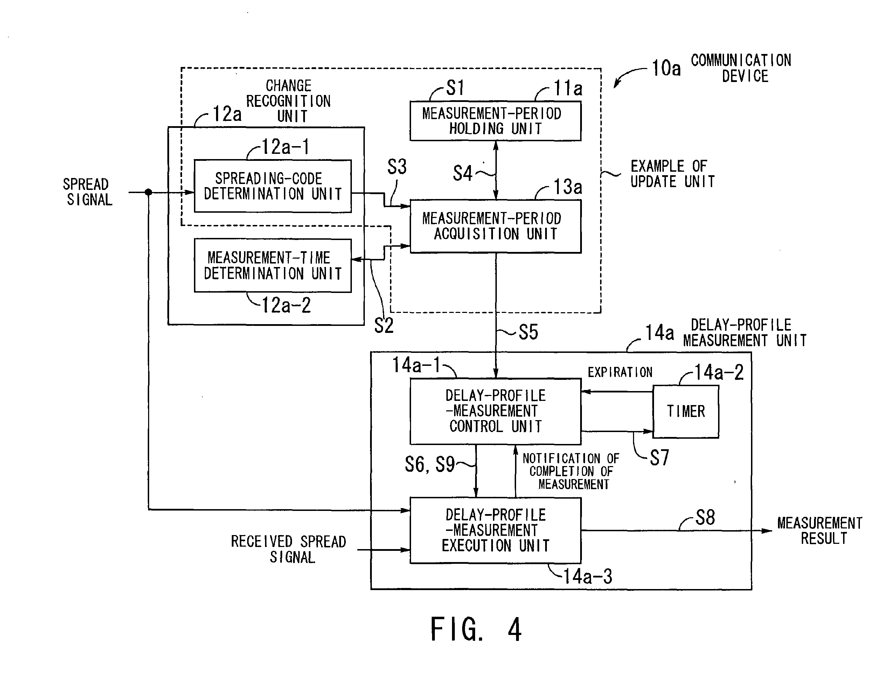

The measurement-period acquisition unit 13 acquires from the measurement-period holding unit 11 a value of the measurement period corresponding to the information on the change of which the measurement-period acquisition unit 13 is notified. That is, the measurement period is changed according to the above change recognized by the change recognition unit 12. The delay-profile measurement unit 14 performs measurement of a delay profile based on the acquired value of the measurement period during a time which is necessary and appropriate for the measurement of the delay profile. Details of the construction and operations of the communication device 10 will be explained later with reference to FIGS. 4 to 35.

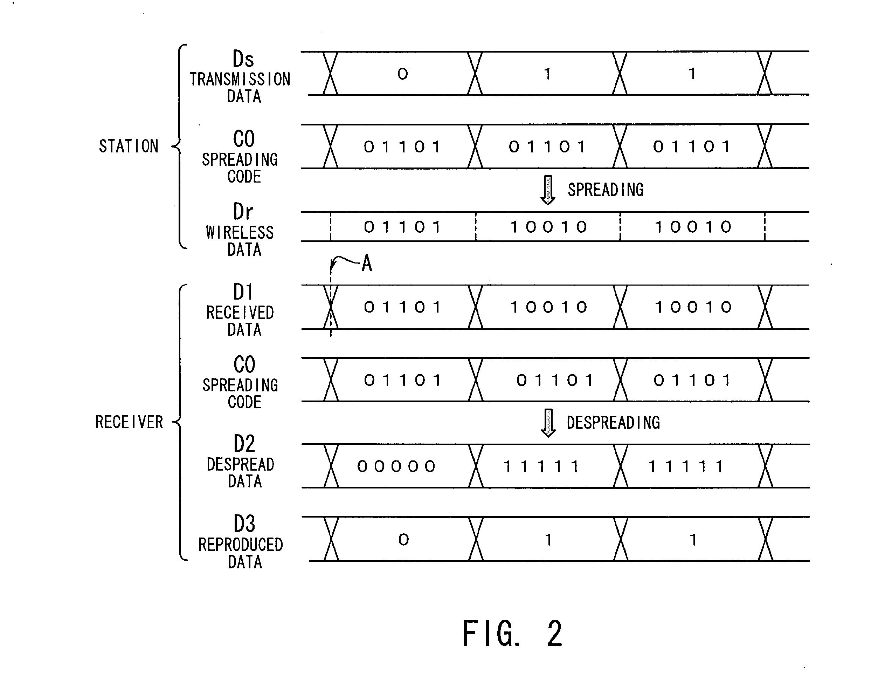

Next, the measurement of delay profiles performed by the delay-profile measurement unit 14 is explained below. First, an outline of the code spread method, which is used in CDMA terminals and the like, is explained. FIG. 2 is a diagram for explaining a code spread system. In the transmission station in the example of FIG. 2, a data series in the transmission data Ds is multiplied by a spreading code C0 (which is a bit series having a higher bit rate than the transmission data Ds) so as to generate the spread transmission data, and the spread transmission data is converted to wireless data Dr, which is to be outputted.

In the example of FIG. 2, each bit "0" in the transmission data Ds is multiplied by the spreading code C0 "01101" so as to generate a bit series "01101", and each bit "1" in the transmission data Ds is multiplied by the spreading code C0 "01101" so as to generate another bit series "10010." At this time, the multiplication is the exclusive OR operation. The generated bit series are converted to the wireless data Dr, which is to be outputted.

The receiver in the example of FIG. 2 holds the same spreading code C0 as that the transmission station uses. The receiver receives the wireless data Dr, and down-converts the received wireless data Dr so as to generate reception data D1. Then, the receiver despreads the reception data D1 so as to generate despread data D2 by multiplying the reception data D1 by the spreading code C0. Specifically, the receiver multiplies the bit series "01101" in the reception data D1 by the spreading code C0 ("01101") so as to generate a bit series "00000" of the despread data D2, and multiplies each bit series "10010" in the reception data D1 by the spreading code C0 ("01101") so as to generate a bit series "11111" of the despread data D2. Thus, reproduced data D3 is generated as illustrated in FIG. 2.

In the above explanations, for simplicity of the explanations, it is assumed that there is no lag between the timeslots of the reception data D1 and the spreading code C0 when the reception data D1 is multiplied by the spreading code C0. However, in practice, the timings of the timeslots of the reception data D1 are unknown to the receiver. Therefore, it is necessary for the receiver to detect the timings of the timeslots of the reception data D1 (e.g., to detect the timeslot boundary A which is illustrated in FIG. 2). Since control operations for detecting the timings of the timeslots are identical to control operations for detecting delay times, the control operations for detecting the timings of the timeslots realize measurement of a delay profile.

In the measurement of a delay profile, operations of shifting the phase of the spreading code C0 by one bit, despreading the reception data D1, and obtaining a sum of bit values in each timeslot of the despread data are repeated. In the despreading, the reception data D1 is multiplied by the spreading code C0.

In the summation of bit values in each timeslot of the despread data, for example, "-1" is assigned to each bit "0" in each timeslot of the despread data, "+1" is assigned to each bit "1" in each timeslot of the despread data, and the values assigned to the bits of each timeslot are summed. It is preferable to use a known pilot signal as the reception data D1. In this case, influences of noise components can be suppressed.

Then, the results of the above summation in the respective phases of the spreading code C0 are plotted. When the reception data D1 is in phase with the spreading code C0, the bits constituting the despread data D2 become all "0" or all "1." Therefore, the sums of the values assigned to the respective bits constituting the despread data D2 are polarized into "-5" and "+5." Thus, it is possible to consider that the timings of timeslots of the reception data D1 most probably become in phase with the spreading code C0 when the absolute value of the summation is maximized.

In addition, if more than one timeslot boundary A is detected by the above operations, it is possible to recognize that multipath signals (multiple reflection signals) are received.

Next, the measurement period and the measurement time in measurement of delay profiles according to the present invention are explained below.

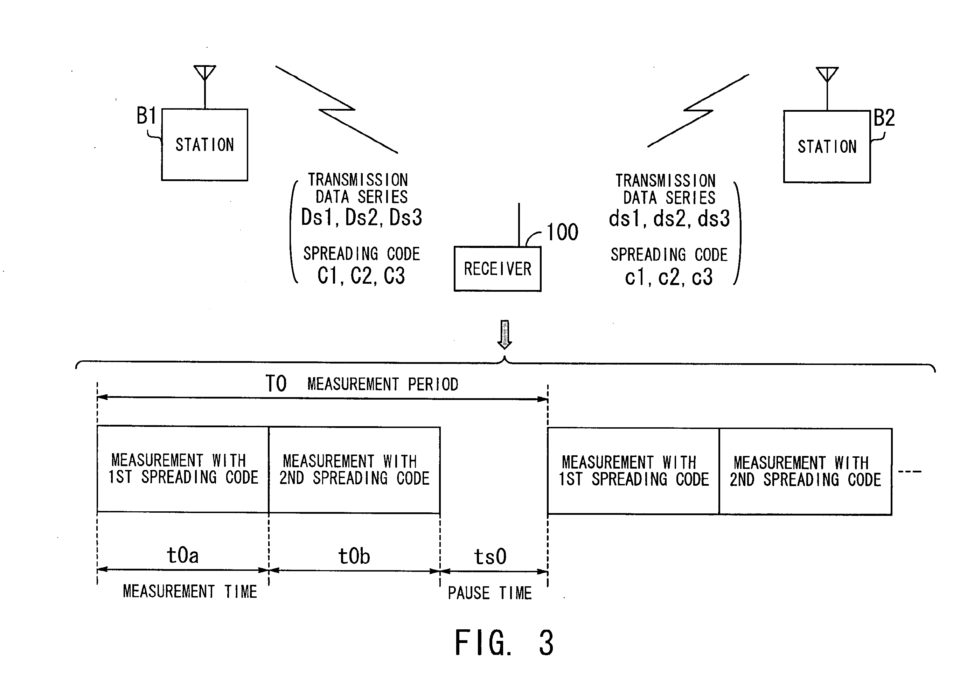

The measurement period is a period in which measurements using an identical spreading code are repeated, where each of the measurements is performed in a measurement time in which a correlation between a received signal and a spreading code can be obtained. The measurement period T0 in FIG. 3 corresponds to the measurement period T in FIG. 36.

During a measurement time in which a measurement of a delay profile is performed with a first spreading code, only the first spreading code is set in a matched filter unit, which obtains a correlation and produces a delay profile. Thereafter, during another measurement time in which a measurement of a delay profile is performed with a second spreading code, the matched filter unit obtains a correlation and produces a delay profile for the second single spreading code. Therefore, in this case, it is possible to consider that only one spreading code is used. Hereinafter, a number obtained by subtracting the number of spreading codes for which production of a delay profile can be dispensed with for some reason, from the number of all spreading codes with which despreading is to be performed, is referred to as a degenerated spreading-code number. For example, when a first signal is received from the same source as a second signal for which a delay profile is produced, production of a delay profile of the first signal can be dispensed with.

Specifically, when a plurality of transmission data series are transmitted from a single source (station), the plurality of transmission data series are respectively spread with individual spreading codes. In this case, it is unnecessary to detect a timeslot boundary in every transmission data series, i.e., it is sufficient to choose one of the plurality of transmission data series, and detect a timeslot boundary by using a spreading code with which the chosen transmission data series is spread. Since the plurality of transmission data series are transmitted from an identical source, information on time lags between the plurality of transmission data series is sent from the source. Therefore, it is unnecessary to measure delay profiles of all of the plurality of transmission data series.

FIG. 3 is a diagram illustrating a measurement period and a measurement time for delay profile measurement. In FIG. 3, a plurality of transmission data series are transmitted from an identical source. The plurality of transmission data series Ds1 to Ds3 which are respectively spread with the spreading codes C1 to C3 are transmitted from the station B1, and the plurality of transmission data series ds1 to ds3 which are respectively spread with the spreading codes c1 to c3 are transmitted from the station B2.

In the above circumstances, for example, the receiver 100 selects the transmission data series Ds1 from among the plurality of transmission data series Ds1 to Ds3 transmitted from the station B1, and detects a leading edge of a timeslot of the transmission data series Ds1 by using the spreading code C1. In addition, the receiver 100 selects the transmission data series ds1 from among the plurality of transmission data series ds1 to ds3 transmitted from the station B2, and detects a timeslot boundary of the transmission data series ds1 by using the spreading code c1.

The measurement time t0a in which the transmission data series Ds1 is measured by using the spreading code C1, the measurement time t0b in which the transmission data series ds1 is measured by using the spreading code c1, the measurement pause time ts0, and the measurement period T0 for delay profile measurement have a relationship as illustrated in FIG. 3.

### [First Embodiment]

A construction and operations (for performing a method for measuring delay profiles) of a communication device according to the first embodiment of the present invention are explained below. In the communication device according to the first embodiment, delay profiles are measured by changing the measurement period according to increase or decrease in the number of spreading codes.

FIG. 4 is a diagram illustrating a construction of the communication device in the first embodiment of the present invention. The communication device 10a holds values of the measurement period in correspondence with values of the number of spreading codes with which delay profiles are to be measured, changes the measurement period in response to increase or decrease in the number of spreading codes, and measures delay profiles.

The communication device 10a comprises a measurement-period holding unit 11a, a change recognition unit 12a, a measurement-period acquisition unit 13a, and a delay-profile measurement unit 14a. The change recognition unit 12a comprises a spreading-code determination unit 12a-1 and a measurement-time determination unit 12a-2. The delay-profile measurement unit 14a comprises a delay-profile-measurement control unit 14a-1, a timer 14a-2, and a delay-profile-measurement execution unit 14a-3.

The operations (for performing a method for measuring delay profiles) of the communication device according to the first embodiment are as follows.
[S1] The measurement-period holding unit 11a stores information on correspondences between possible values of the number of spreading codes with which delay profiles are to be measured and applicable values of the measurement period which are obtained by experiment, simulation, or the like. For example, an address is assigned to each value of the number of spreading codes, and the measurement-period holding unit 11a stores a value of the measurement period at each address.
[S2] The measurement-time determination unit 12a-2 notifies the measurement-period acquisition unit 13a of a value of the measurement time which the measurement-time determination unit 12a-2 holds.
[S3] The spreading-code determination unit 12a-1 receives spread signals to be despread, and detects spreading codes. Then, the spreading-code determination unit 12a-1 recognizes the number of the spreading codes with which delay profiles are required to be measured, and notifies the measurement-period acquisition unit 13a of the recognized number. Instead of directly measuring the number of spread signals which are inputted into the delay-profile measurement unit 14a and are to be measured, it is possible to acquire individual information (including the degenerated spreading-code number) from a control unit (not shown).
[S4] The measurement-period acquisition unit 13a acquires from the measurement-period holding unit 11a a value of the measurement period corresponding to the number of which the measurement-period acquisition unit 13a is notified in step S3.
[S5] The measurement-period acquisition unit 13a notifies the delay-profile measurement unit 14a of the value of the measurement period acquired in step S4, the number of the spreading codes of which the measurement-period acquisition unit 13a is notified in step S3, and the value of the measurement time of which the measurement-period acquisition unit 13a is notified in step S2.
[S6] When the delay-profile-measurement control unit 14a-1 receives a notification of completion of a measurement, which is sent from the delay-profile-measurement execution unit 14a-3, the delay-profile-measurement control unit 14a-1 notifies the delay-profile-measurement execution unit 14a-3 of the number of the spreading codes and the value of the measurement time of which the delay-profile measurement unit 14a is notified in step S5, and makes the delay-profile-measurement execution unit 14a-3 start measurement.
   For example, in the case where the number of the spreading codes is two, each measurement period contains two measurement times. In the first one of the two measurement times, a first spreading code is set in a matched filter (as an example of a correlation detection unit), a correlation between the first spreading code and a received spread signal is obtained, and inphase summation or the like is performed. Thereafter, in the second one of the two measurement times following the first one, a second spreading code is set in the matched filter, a correlation between the second spreading code and a received spread signal is obtained, and inphase summation or the like is performed.
[S7] At the same time as the operations in step S6, the delay-profile-measurement control unit 14a-1 notifies the timer 14a-2 of the value of the measurement period of which the delay-profile measurement unit 14a is notified in step S5, and makes the timer 14a-2 start counting the measurement period based on the above value.
[S8] The delay-profile-measurement execution unit 14a-3 successively performs measurement of delay profiles of received spread signals based on the spreading codes corresponding to the number of which the delay-profile-measurement execution unit 14a-3 is notified in step S6. When the measurement time elapses, and a measurement of a delay profile is completed, the delay-profile-measurement execution unit 14a-3 outputs a result of the measurement of the delay profile, and sends a notification of the completion of the measurement to the delay-profile-measurement control unit 14a-1.
[S9] When the delay-profile-measurement control unit 14a-1 receives notifications of completion of measurements for all of the spreading codes with which the delay profiles are to be measured and a notification of expiration of the measurement period from the timer 14a-2, the delay-profile-measurement control unit 14a-1 makes the delay-profile-measurement execution unit 14a-3 start measurement again, although the delay-profile-measurement execution unit 14a-3 is at rest after the previous measurement is completed until the delay-profile-measurement execution unit 14a-3 is controlled so as to start the measurement.

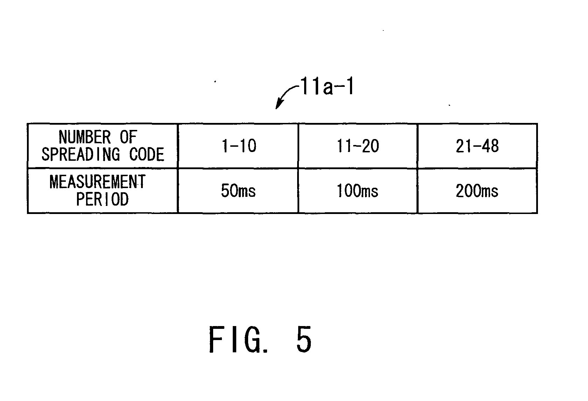

Next, relationships among the measurement period, the measurement time, and the pause time are explained in detail below with reference to FIGS. 5 to 10, which illustrate concrete examples.

FIG. 5 is a diagram illustrating a management table in the first embodiment. The management table 11a-1 is a table which is held in the measurement-period holding unit 11a, and indicates correspondences between the possible values of the number of spreading codes and the applicable values of the measurement period. In the example of FIG. 5, the applicable values of the measurement period are determined in advance under the condition that the number of spreading codes is in the range from 1 to 48, and a delay profile is measured with each spreading code one by one in a measurement time of 4 milliseconds.

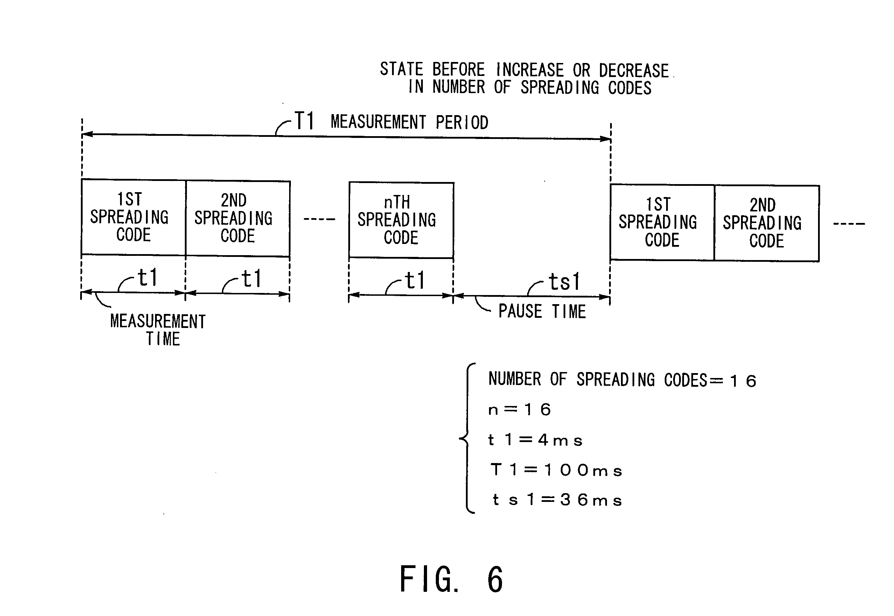

FIG. 6 is a diagram illustrating a state before the number of the spreading codes increases or decreases in the first embodiment, where the spreading codes are detected by the spreading-code determination unit 12a-1 in FIG. 4 as spreading codes with which delay profile measurement is to be performed.

In the case where the number of the spreading codes is 16 before the number of the spreading codes increases or decreases, the measurement period is 100 milliseconds as illustrated in FIG. 5. Therefore, in FIG. 6, n=16, the delay-profile measurement time t1 = 4 milliseconds, the delay-profile measurement period T1 = 100 milliseconds, and the delay-profile-measurement pause time ts1 = 36 milliseconds.

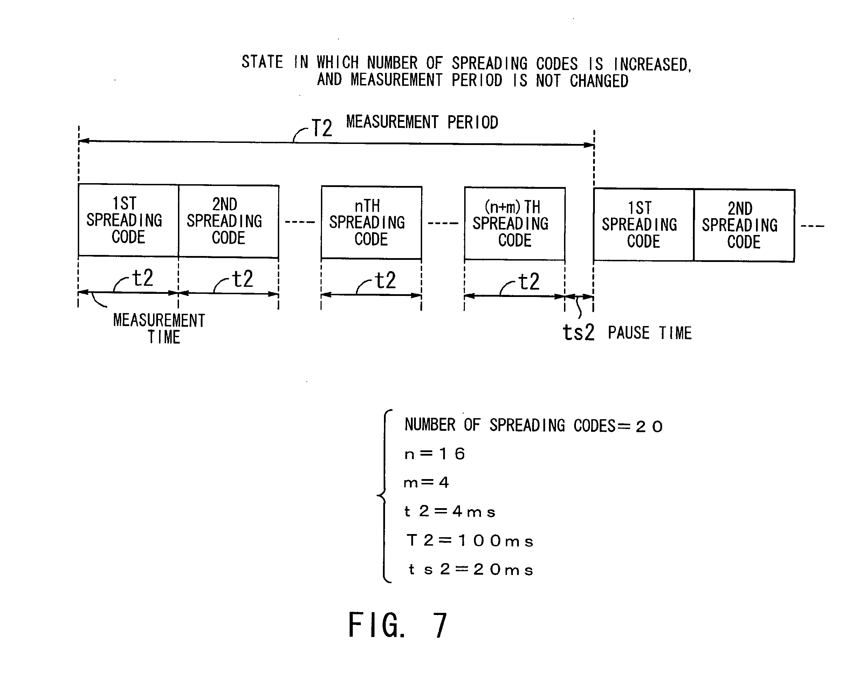

FIG. 7 is a diagram illustrating a state in the first embodiment in which the number of the spreading codes is increased, and the measurement period is not changed. When the number of the spreading codes is increased from 16 (as illustrated in FIG. 6) to 20, the measurement period is 100 milliseconds (according to FIG. 5). That is, the measurement period is not changed. Therefore, in this case, the communication device operates as illustrated in FIG. 7. In FIG. 7, n=16, m=4, the delay-profile measurement time t2 = 4 milliseconds, the delay-profile measurement period T2 = 100 milliseconds, and the delay-profile-measurement pause time ts2 = 20 milliseconds.

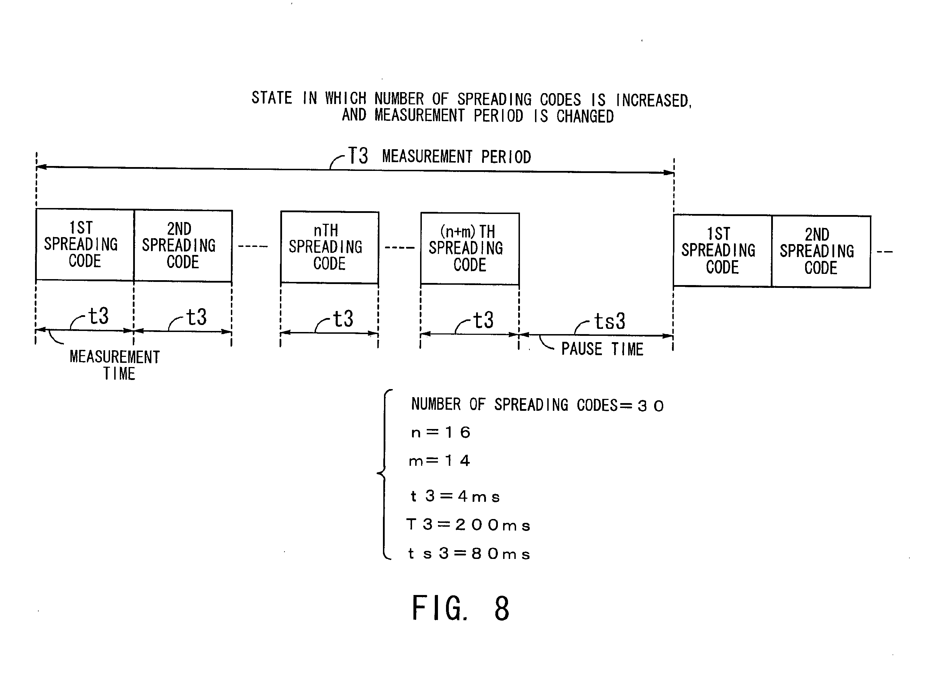

FIG. 8 is a diagram illustrating a state in the first embodiment in which the number of the spreading codes is increased, and the measurement period is changed. When the number of the spreading codes is increased from 16 (as illustrated in FIG. 6) to 30, the measurement period becomes 200 milliseconds (according to FIG. 5). That is, the measurement period is changed. Therefore, in this case, the communication device operates as illustrated in FIG. 8. In FIG. 8, n=16, m=14, the delay-profile measurement time t3 = 4 milliseconds, the delay-profile measurement period T3 = 200 milliseconds, and the delay-profile-measurement pause time ts3 = 80 milliseconds.

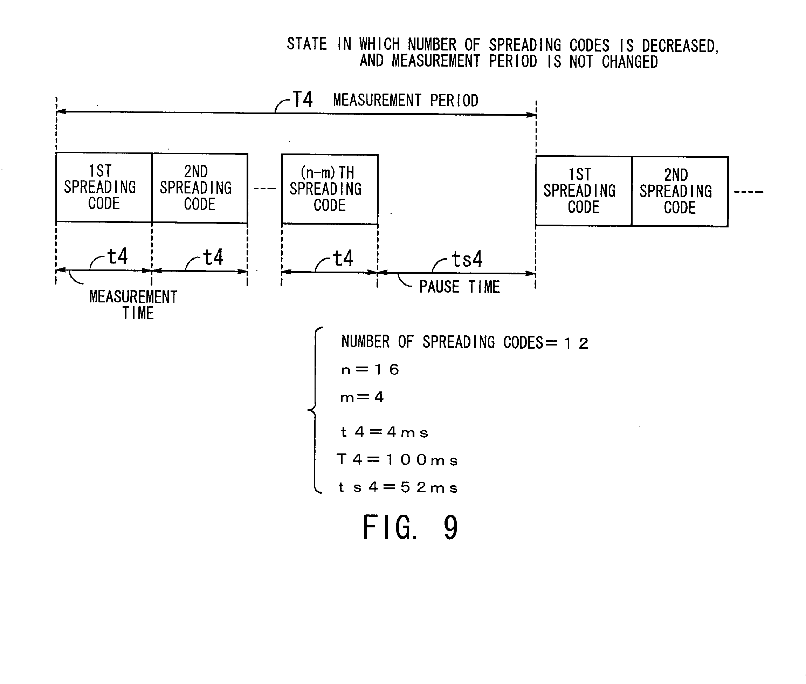

FIG. 9 is a diagram illustrating a state in the first embodiment in which the number of the spreading codes is decreased, and the measurement period is not changed. When the number of the spreading codes is decreased from 16 (as illustrated in FIG. 6) to 12, the measurement period is 100 milliseconds (according to FIG. 5). That is, the measurement period is not changed. Therefore, in this case, the communication device operates as illustrated in FIG. 9. In FIG. 9, n=16, m=4, the delay-profile measurement time t4 = 4 milliseconds, the delay-profile measurement period T4 = 100 milliseconds, and the delay-profile-measurement pause time ts4 = 52 milliseconds.

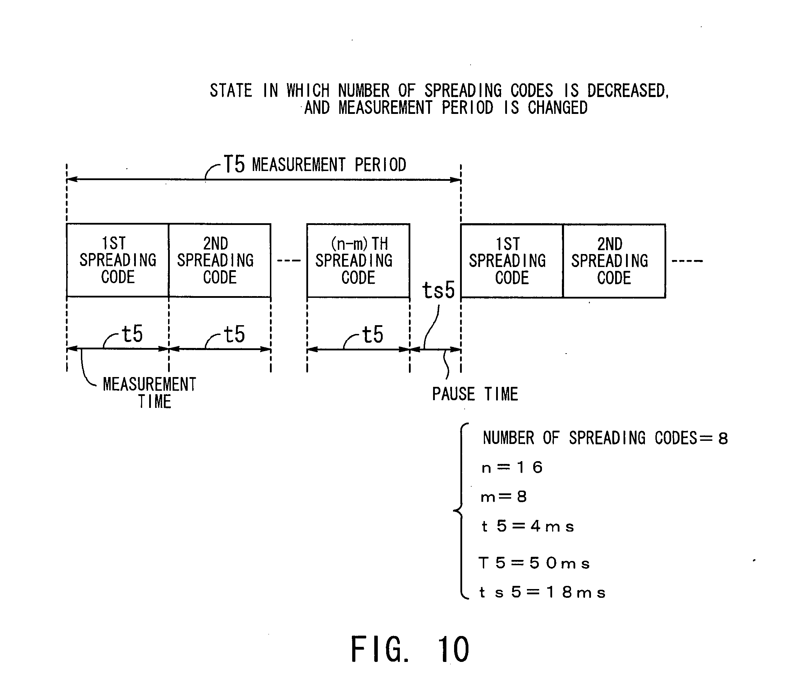

FIG. 10 is a diagram illustrating a state in the first embodiment in which the number of the spreading codes is decreased, and the measurement period is changed. When the number of the spreading codes is decreased from 16 (as illustrated in FIG. 6) to 8, the measurement period becomes 50 milliseconds (according to FIG. 5). That is, the measurement period is changed. Therefore, in this case, the communication device operates as illustrated in FIG. 10. In FIG. 10, n=16, m=8, the delay-profile measurement time t5 = 4 milliseconds, the delay-profile measurement period T5 = 50 milliseconds, and the delay-profile-measurement pause time ts5 = 18 milliseconds.

### [Second Embodiment]

A construction and operations (for performing a method for measuring delay profiles) of a communication device according to the second embodiment of the present invention are explained below. In the communication device according to the second embodiment, delay profiles are measured by changing the measurement period according to increase or decrease in the measurement time, which is determined according to reception quality.

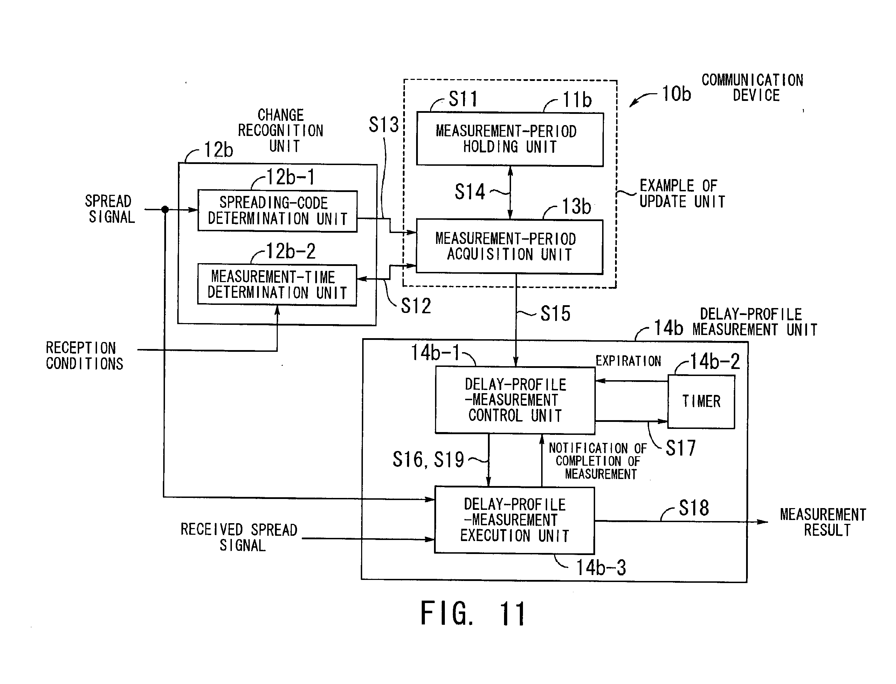

FIG. 11 is a diagram illustrating a communication device in the second embodiment of the present invention. The communication device 10b holds values of the measurement period in correspondence with values indicating a measurement time (for delay profile measurement), changes the measurement period in response to increase or decrease in the measurement time, and measures delay profiles, where the measurement time is determined according to reception quality.

The communication device 10b comprises a measurement-period holding unit 11b, a change recognition unit 12b, a measurement-period acquisition unit 13b, and a delay-profile measurement unit 14b. The change recognition unit 12b comprises a spreading-code determination unit 12b-1 and a measurement-time determination unit 12b-2. The delay-profile measurement unit 14b comprises a delay-profile-measurement control unit 14b-1, a timer 14b-2, and a delay-profile-measurement execution unit 14b-3.

The operations (for performing a method for measuring delay profiles) of the communication device according to the second embodiment are as follows.
[S11] The measurement-period holding unit 11b stores in advance applicable values of the measurement period in correspondence with ranges of possible values of the measurement time, where the applicable values of the measurement period are obtained by experiment, simulation, or the like, and the measurement time is determined according to reception quality.
[S12] The measurement-time determination unit 12b-2 determines a value of the measurement time which enables achievement of predetermined reception quality, based on information on reception conditions (which includes, for example, quality of actually received signals, or forecast information which indicates that the reception quality will deteriorate due to fast movement), and notifies the measurement-period acquisition unit 13b of the determined value of the measurement time.
[S13] The spreading-code determination unit 12b-1 receives spread signals, detects the number of spreading codes (the degenerated spreading-code number), and notifies the measurement-period acquisition unit 13b of the detected number.
[S14] The measurement-period acquisition unit 13b acquires from the measurement-period holding unit 11b a value of the measurement period corresponding to the number of which the measurement-period acquisition unit 13b is notified in step S13.
[S15] The measurement-period acquisition unit 13b notifies the delay-profile measurement unit 14b of the value of the measurement period acquired in step S14, the number of the spreading codes of which the measurement-period acquisition unit 13b is notified in step S13, and the value of the measurement time determined in step S12.
[S16] When the delay-profile-measurement control unit 14b-1 receives a notification of completion of a measurement, which is sent from the delay-profile-measurement execution unit 14b-3, the delay-profile-measurement control unit 14b-1 notifies the delay-profile-measurement execution unit 14b-3 of the number of the spreading codes and the value of the measurement time of which the delay-profile measurement unit 14b is notified in step S15, and makes the delay-profile-measurement execution unit 14b-3 start measurement.
[S17] At the same time as the operations in step S16, the delay-profile-measurement control unit 14b-1 notifies the timer 14b-2 of the value of the measurement period of which the delay-profile measurement unit 14b is notified in step 15, and makes the timer 14b-2 start counting the measurement period based on the above value.
[S18] The delay-profile-measurement execution unit 14b-3 performs measurement of delay profiles of received spread signals based on the spreading codes corresponding to the number of which the delay-profile measurement unit 14b-3 is notified in step S16. When the measurement of delay profiles is completed, the delay-profile-measurement execution unit 14b-3 outputs results of the measurement of the delay profiles, and sends a notification of the completion of the measurement to the delay-profile-measurement control unit 14b-1.
[S19] When the delay-profile-measurement control unit 14b-1 receives the notification of completion of the measurement and a notification of expiration of the measurement period from the timer 14b-2, the delay-profile-measurement control unit 14b-1 makes the delay-profile-measurement execution unit 14b-3 start measurement again.

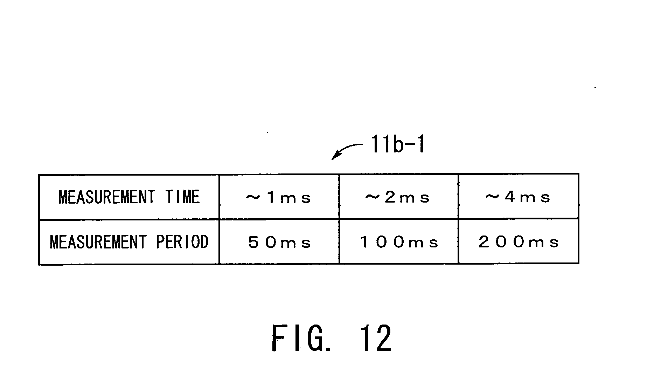

Next, relationships among the measurement period, the measurement time, and the pause time are explained in detail below with reference to FIGS. 12 to 17, which illustrate concrete examples.

FIG. 12 is a diagram illustrating a management table in the second embodiment. The management table 11b-1 is a table which is held in the measurement-period holding unit 11b, and indicates correspondences between the possible values of the measurement time and the applicable values of the measurement period. In the example of FIG. 12, the applicable values of the measurement period are determined in advance under the condition that the maximum value of the measurement time determined according to the reception quality is 4 milliseconds, and the maximum number of the spreading codes is 48.

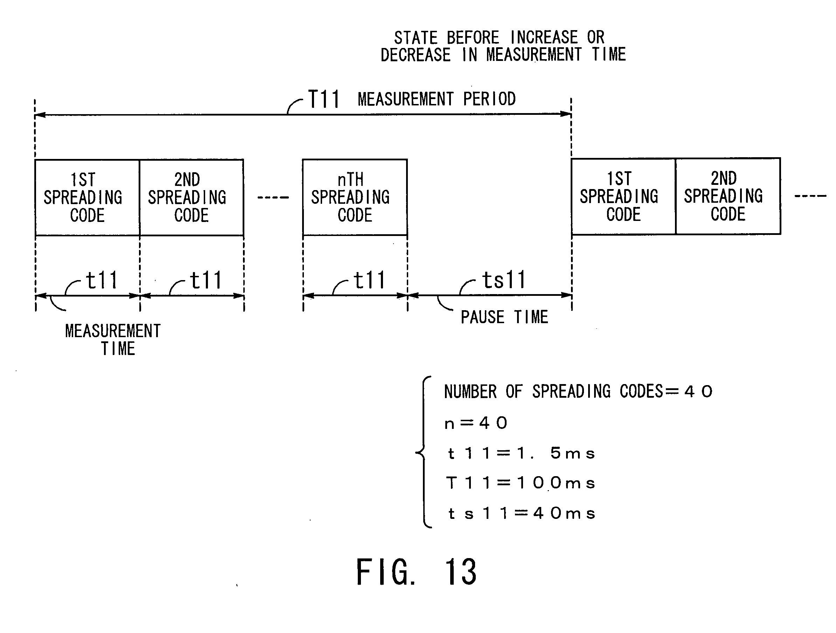

FIG. 13 is a diagram illustrating a state before the measurement time increases or decreases in the second embodiment. In the case where the measurement time is 1.5 milliseconds before the measurement time increases or decreases, the measurement period becomes 100 milliseconds according to FIG. 12. Therefore, when the number of the spreading codes is determined to be 40 by the spreading-code determination unit 12b-1 in FIG. 11, as illustrated in FIG. 13, n=40, the delay-profile measurement time t11 = 1.5 milliseconds, the delay-profile measurement period T11 = 100 milliseconds, and the delay-profile-measurement pause time ts11 = 40 milliseconds.

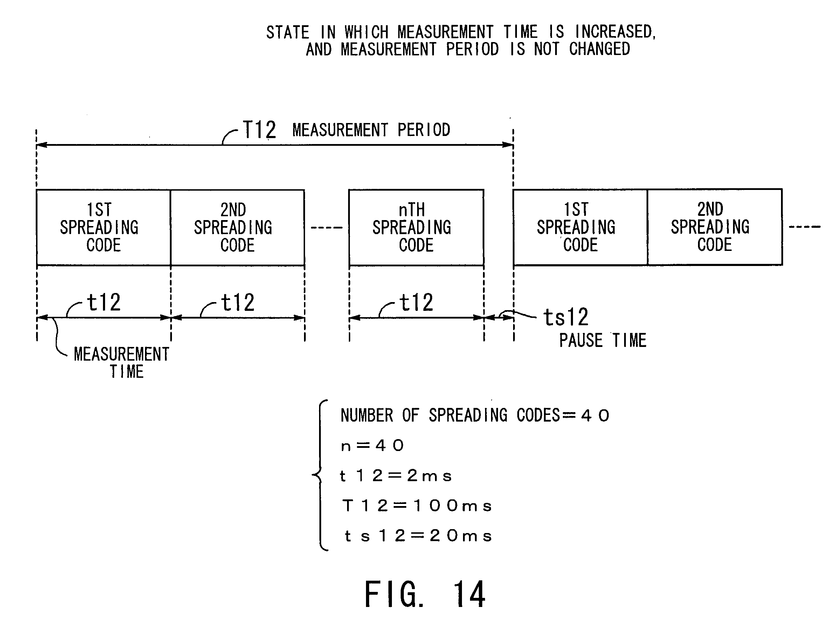

FIG. 14 is a diagram illustrating a state in the second embodiment in which the measurement time is increased, and the measurement period is not changed. When the measurement time is increased from 1.5 milliseconds (as illustrated in FIG. 13) to 2 milliseconds, the measurement period is 100 milliseconds (according to FIG. 12). That is, the measurement period is not changed. Therefore, in this case, the communication device operates as illustrated in FIG. 14. In FIG. 14, n=40, the delay-profile measurement time t12 = 2 milliseconds, the delay-profile measurement period T12 = 100 milliseconds, and the delay-profile-measurement pause time ts12 = 20 milliseconds.

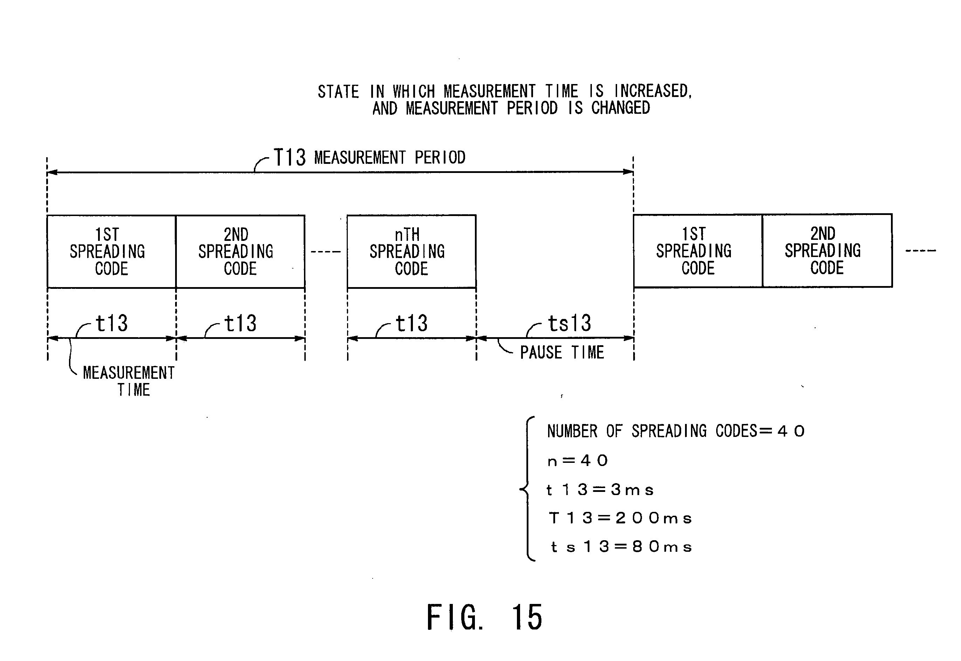

FIG. 15 is a diagram illustrating a state in the second embodiment in which the measurement time is increased, and the measurement period is changed. When the measurement time is increased from 1.5 milliseconds (as illustrated in FIG. 13) to 3 milliseconds, the measurement period becomes 200 milliseconds (according to FIG. 12). That is, the measurement period is changed. Therefore, in this case, the communication device operates as illustrated in FIG. 15. In FIG. 15, n=40, the delay-profile measurement time t13 = 3 milliseconds, the delay-profile measurement period T13 = 200 milliseconds, and the delay-profile-measurement pause time ts13 = 80 milliseconds.

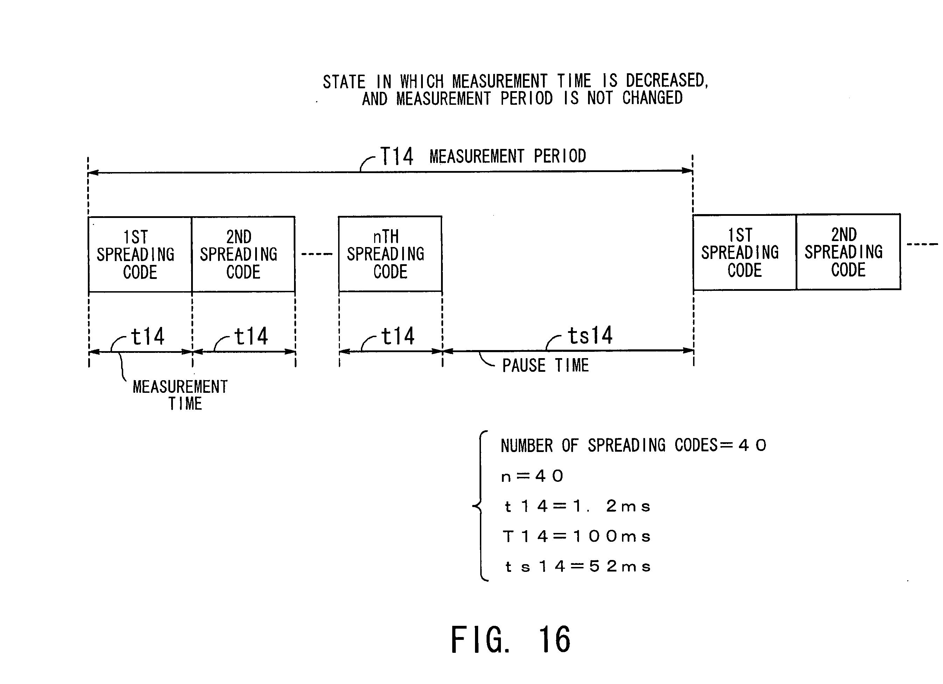

FIG. 16 is a diagram illustrating a state in the second embodiment in which the measurement time is decreased, and the measurement period is not changed. When the measurement time is decreased from 1.5 milliseconds (as illustrated in FIG. 13) to 1.2 milliseconds, the measurement period is 100 milliseconds (according to FIG. 12). That is, the measurement period is not changed. Therefore, in this case, the communication device operates as illustrated in FIG. 16. In FIG. 16, n=40, the delay-profile measurement time t14 = 1.2 milliseconds, the delay-profile measurement period T14 = 100 milliseconds, and the delay-profile-measurement pause time ts14 = 52 milliseconds.

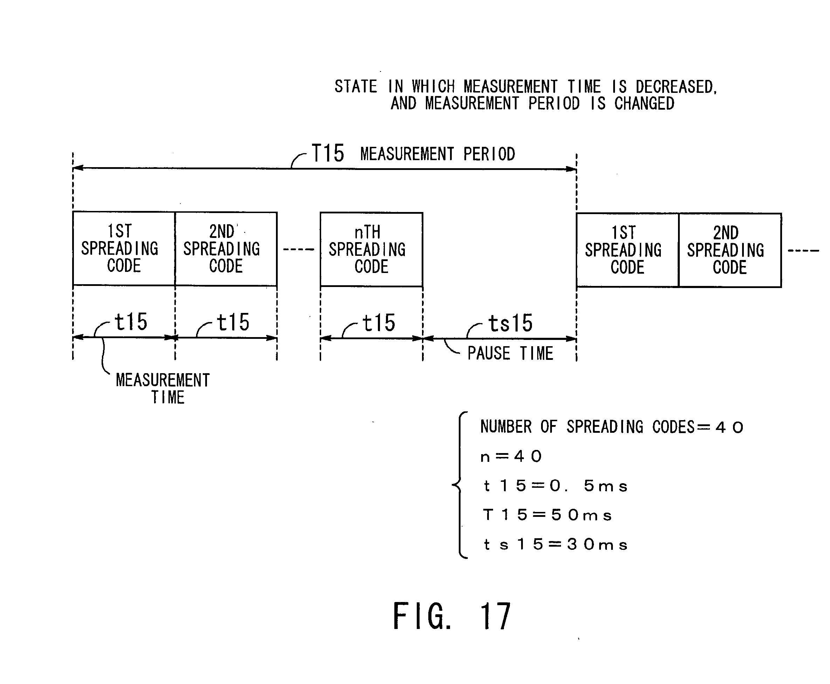

FIG. 17 is a diagram illustrating a state in the second embodiment in which the measurement time is decreased, and the measurement period is changed. When the measurement time is decreased from 1.5 milliseconds (as illustrated in FIG. 13) to 0.5 milliseconds, the measurement period becomes 50 milliseconds (according to FIG. 12). That is, the measurement period is changed. Therefore, in this case, the communication device operates as illustrated in FIG. 17. In FIG. 17, n=40, the delay-profile measurement time t15 = 0.5 milliseconds, the delay-profile measurement period T15 = 50 milliseconds, and the delay-profile-measurement pause time ts15 = 30 milliseconds.

As explained above, according to the present invention, values of the measurement period are prepared in advance in correspondence with ranges of possible values of the number of spreading codes with which delay profiles are to be measured, or ranges of possible values of the measurement time, which is determined based on information on reception conditions. Therefore, the measurement period can be immediately changed when the number of spreading codes or the measurement time increases or decreases. Thus, it is possible to make the measurement time in the delay profile measurement flexible, and flexibly change the time utilization rate in a circuit which measures delay profiles, when necessary. The time utilization rate is determined by, for example, a measurement period, a measurement time, a pause time, and the like. Consequently, the transmission quality can be improved.

In addition, it is unnecessary to provide a circuit for calculating a value to which the measurement period is to be changed when the change of the measurement period becomes necessary. Therefore, the circuit construction of the communication device can be simplified, and thus the size of the communication device can be reduced.

### [Third Embodiment]

A construction and operations (for performing a method for measuring delay profiles) of a communication device according to the,third embodiment of the present invention are explained below. In the communication device according to the third embodiment, delay profiles are measured by changing the measurement period according to increase or decrease in at least one of the number of spreading codes and the measurement time, which is determined based on information on reception conditions.

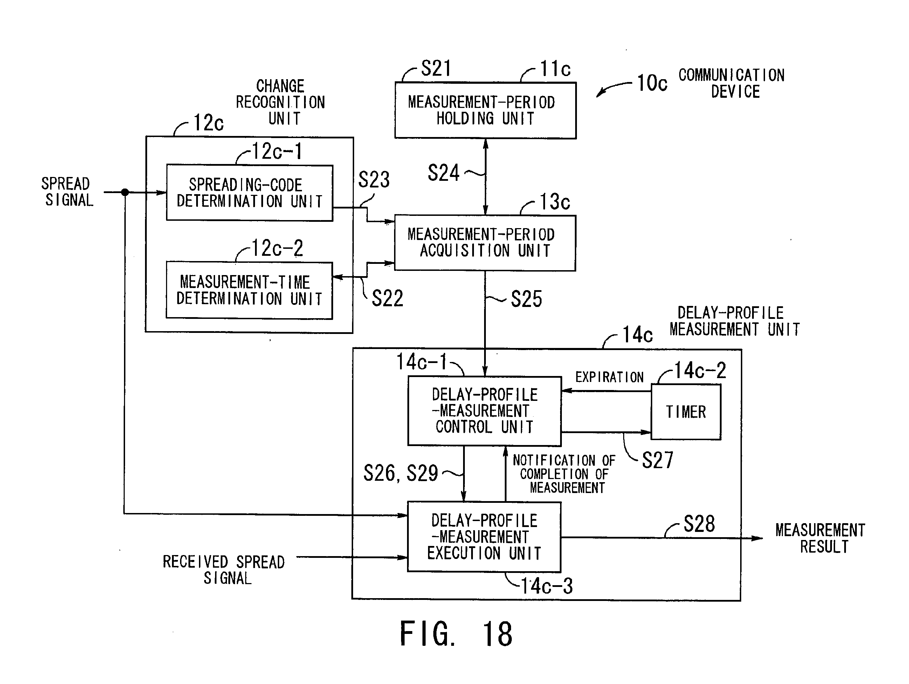

FIG. 18 is a diagram illustrating a communication device in the third embodiment of the present invention. The communication device 10c holds values of the measurement period in correspondence with combinations of values of the number of spreading codes (with which delay profiles are measured) and values of the measurement time (for delay profile measurement), which is determined based on information on reception conditions. Then, the communication device 10c changes the measurement period in response to increase or decrease in at least one of the number of spreading codes and the measurement time, and measures delay profiles.

The communication device 10c comprises a measurement-period holding unit 11c, a change recognition unit 12c, a measurement-period acquisition unit 13c, and a delay-profile measurement unit 14c. The change recognition unit 12c comprises a spreading-code determination unit 12c-1 and a measurement-time determination unit 12c-2. The delay-profile measurement unit 14c comprises a delay-profile-measurement control unit 14c-1, a timer 14c-2, and a delay-profile-measurement execution unit 14c-3.

The operations (for performing a method for measuring delay profiles) of the communication device according to the third embodiment are as follows.
[S21] The measurement-period holding unit 11c stores in advance applicable values of the measurement period in correspondence with all or necessary combinations of ranges of possible values of the number of spreading codes (with which delay profiles are measured) and ranges of possible values of the measurement time (for delay profile measurement), where the applicable values of the measurement period are obtained by experiment, simulation, or the like, and the measurement time is determined based on information on reception conditions.
[S22] The measurement-time determination unit 12c-2 receives information on the reception conditions, determines a value of the measurement time which enables achievement of predetermined reception quality, and notifies the measurement-period acquisition unit 13c of the determined value of the measurement time.
[S23] The spreading-code determination unit 12c-1 receives spread signals, and detects spreading codes. Then, the spreading-code determination unit 12c-1 recognizes the number of the spreading codes with which delay profiles are required to be measured, and notifies the measurement-period acquisition unit 13c of the recognized number.
[S24] The measurement-period acquisition unit 13c acquires from the measurement-period holding unit 11c a value of the measurement period corresponding to the combination of the value of the measurement time and the number of the spreading codes of which the measurement-period acquisition unit 13c is notified in steps S22 and S23.
[S25] The measurement-period acquisition unit 13c notifies the delay-profile measurement unit 14c of the value of the measurement period acquired in step S24, the number of the spreading codes, and the value of the measurement time of which the measurement-period acquisition unit 13c is notified in step S22.
[S26] When the delay-profile-measurement control unit 14c-1 receives a notification of completion of a measurement, which is sent from the delay-profile-measurement execution unit 14c-3, the delay-profile-measurement control unit 14c-1 notifies the delay-profile-measurement execution unit 14c-3 of the number of the spreading codes and the value of the measurement time of which the measurement-period acquisition unit 13c is notified in step S22, and makes the delay-profile-measurement execution unit 14c-3 start measurement.
[S27] At the same time as the operations in step S26, the delay-profile-measurement control unit 14c-1 notifies the timer 14c-2 of the value of the measurement period acquired in step S24, and makes the timer 14c-2 start counting the measurement period based on the above value.
[S28] The delay-profile-measurement execution unit 14c-3 performs measurement of delay profiles of received spread signals based on the spreading codes corresponding to the number of which the delay-profile-measurement execution unit 14c-3 is notified in step S26. When the measurement of delay profiles is completed, the delay-profile-measurement execution unit 14c-3 outputs results of the measurement of the delay profiles, and sends a notification of the completion of the measurement to the delay-profile-measurement control unit 14c-1.
[S29] When the delay-profile-measurement control unit 14c-1 receives the notification of completion of the measurement and a notification of expiration of the measurement period from the timer 14c-2, the delay-profile-measurement control unit 14c-1 makes the delay-profile-measurement execution unit 14c-3 start measurement again.

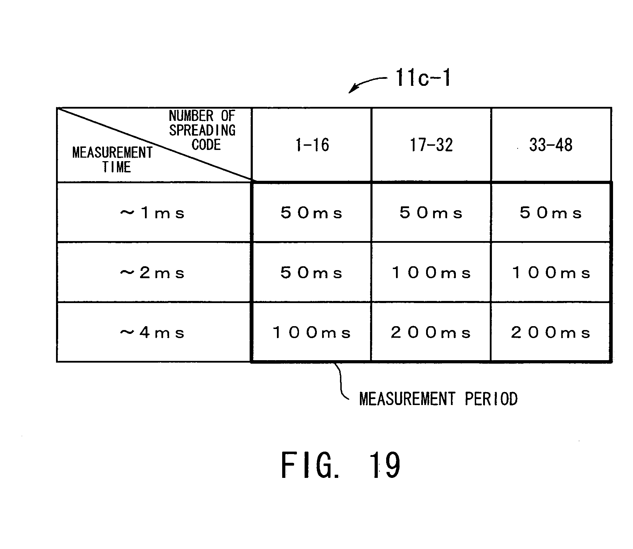

FIG. 19 is a diagram illustrating a management table in the third embodiment. The management table 11c-1 is a table which is held in the measurement-period holding unit 11c, and indicates correspondences between the applicable values of the measurement period and combinations of the possible values of the number of the spreading codes and the possible values of the measurement time. In the example of FIG. 19, the applicable values of the measurement period are determined in advance under the condition that the maximum number of the spreading codes is 48, and the maximum value of the measurement time determined according to the reception quality is 4 milliseconds.

Further, relationships among the measurement period, the measurement time, and the pause time in the third embodiment are obtained based on the above management table in a similar manner to the first and second embodiments. Therefore, the explanations on the relationships among the measurement period, the measurement time, and the pause time are not repeated.

### [Fourth Embodiment]

In the first to third embodiments, the communication device 10a, 10b, or 10c measures delay profiles based on a value of the measurement period corresponding to one of ranges of values of the measurement time and/or one of ranges of values of the number of spreading codes, where applicable values of the measurement period are held in the measurement-period holding unit 11a, 11b, or 11c in correspondence with the ranges of the values of the measurement time and/or the ranges of values of the number of spreading codes, and the measurement time is determined based on information on reception conditions. However, in the communication devices in the fourth to sixth embodiments explained hereinbelow, delay profiles are measured based on a value of the measurement time corresponding to one of ranges of values of the measurement period and/or one of ranges of values of the number of spreading codes, where applicable values of the measurement time are held in a measurement-time holding unit in correspondence with the ranges of the values of the measurement period and/or the ranges of values of the number of spreading codes, and the measurement period is determined based on information on reception conditions.

A construction and operations of a communication device according to the fourth embodiment of the present invention are explained below. In the communication device according to the fourth embodiment, delay profiles are measured by changing the measurement time (instead of the measurement period) according to increase or decrease in the number of spreading codes.

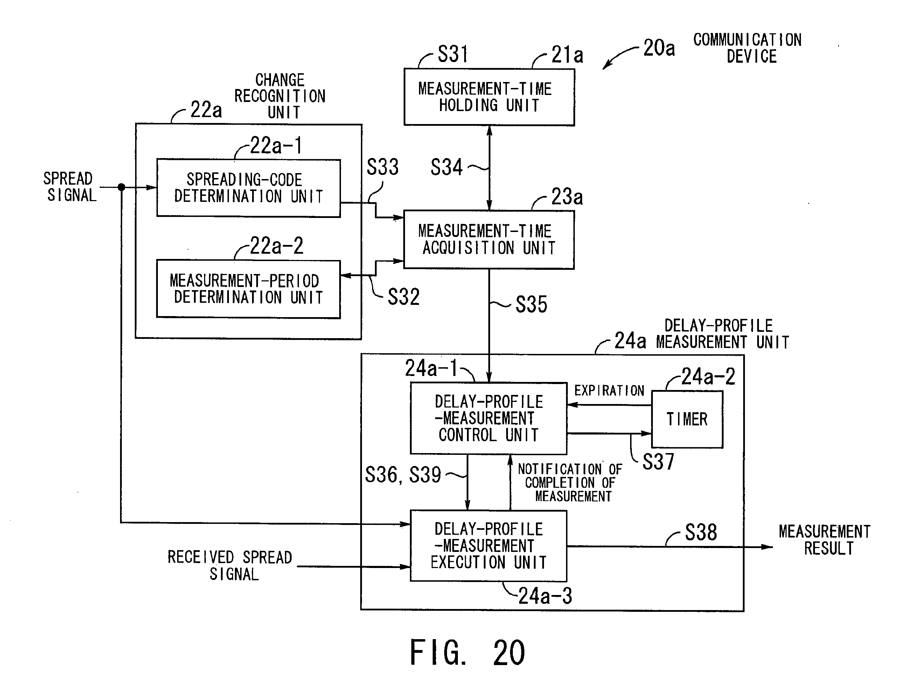

FIG. 20 is a diagram illustrating a communication device in the fourth embodiment of the present invention. The communication device 20a holds values of the measurement time in correspondence with values indicating the number of spreading codes with which delay profiles are to be measured, changes the measurement time in response to increase or decrease in the number of spreading codes, and measures delay profiles.

The communication device 20a comprises a measurement-time holding unit 21a, a change recognition unit 22a, a measurement-time acquisition unit 23a, and a delay-profile measurement unit 24a. The change recognition unit 22a comprises a spreading-code determination unit 22a-1 and a measurement-period determination unit 22a-2. The delay-profile measurement unit 24a comprises a delay-pro'file-measurement control unit 24a-1, a timer 24a-2, and a delay-profile-measurement execution unit 24a-3.

The operations (for performing a method for measuring delay profiles) of the communication device according to the fourth embodiment are as follows.
[S31] The measurement-period holding unit 21a stores in advance applicable values of the measurement time in correspondence with all or a necessary portion of ranges of possible values of the number of spreading codes (with which delay profiles are measured), where the applicable values of the measurement time are obtained by experiment, simulation, or the like.
[S32] The measurement-period determination unit 22a-2 notifies the measurement-time acquisition unit 23a of a value of the measurement period which is used when the measurement-period holding unit 21a determines the aforementioned applicable values of the measurement time.
[S33] The spreading-code determination unit 22a-1 receives spread signals which are to be passed to the delay-profile-measurement execution unit 24a-3 and to be measured, and detects spreading codes with which delay profiles are required to be measured and the number of the spreading codes. Then, the spreading-code determination unit 22a-1 notifies the measurement-time acquisition unit 23a of the detected spreading codes and the number of the spreading codes.
[S34] The measurement-time acquisition unit 23a acquires from the measurement-time holding unit 21a a value of the measurement time corresponding to the number of which the measurement-time acquisition unit 23a is notified in step S33.
[S35] The measurement-time acquisition unit 23a notifies the delay-profile measurement unit 24a of the value of the measurement period of which the measurement-time acquisition unit 23a is notified in step S32, the number of the spreading codes of which the measurement-time acquisition unit 23a is notified in step S33, and the value of the measurement time acquired in step S34.
[S36] When the delay-profile-measurement control unit 24a-1 receives a notification of completion of a measurement, which is sent from the delay-profile-measurement execution unit 24a-3, the delay-profile-measurement control unit 24a-1 notifies the delay-profile-measurement execution unit 24a-3 of the number of the spreading codes and the value of the measurement time of which the delay-profile measurement unit 24 is notified in step S35, and makes the delay-profile-measurement execution unit 24a-3 start measurement.
[S37] At the same time as the operations in step S36, the delay-profile-measurement control unit 24a-1 notifies the timer 24a-2 of the value of the measurement period of which the delay-profile measurement unit 24a is notified in step S35, and makes the timer 24a-2 start counting the measurement period based on the above value.
[S38] The delay-profile-measurement execution unit 24a-3 performs measurement of delay profiles of received spread signals with the spreading codes corresponding to the number of which the delay-profile-measurement execution unit 24a-3 is notified in step S36. When the measurement of delay profiles is completed, the delay-profile-measurement execution unit 24a-3 outputs results of the measurement of the delay profiles, and sends a notification of the completion of the measurement to the delay-profile-measurement control unit 24a-1.
[S39] When the delay-profile-measurement control unit 24a-1 receives the notification of completion of the measurement and a notification of expiration of the measurement period from the timer 24a-2, the delay-profile-measurement control unit 24a-1 makes the delay-profile-measurement execution unit 24a-3 to start measurement again.

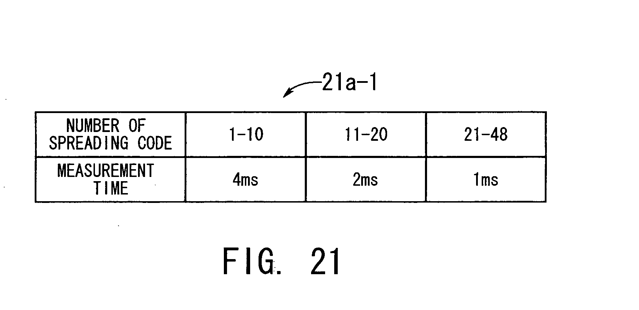

Next, relationships among the measurement period, the measurement time, and the pause time are explained in detail below with reference to FIGS. 21 to 26, which illustrate concrete examples.

FIG. 21 is a diagram illustrating a management table in the fourth embodiment. The management table 21a-1 is a table which is held in the measurement-time holding unit 21a, and indicates correspondences between the possible values of the number of spreading codes and the applicable values of the measurement time. In the example of FIG. 21, the applicable values of the measurement time are determined in advance under the condition that the possible values of the number of spreading codes range from 1 to 48, and measurement of a delay profile is repeated with a measurement period of 50 milliseconds.

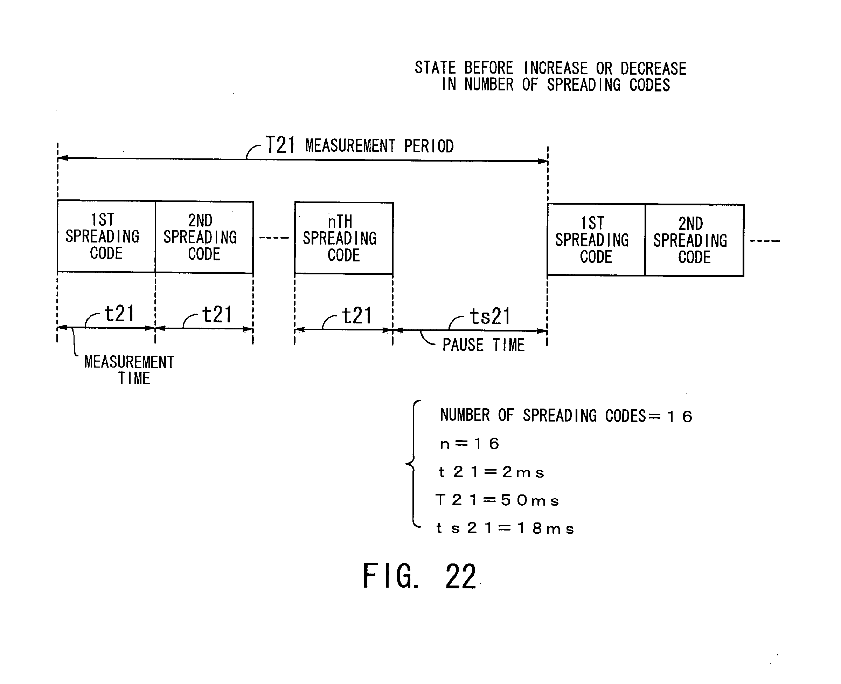

FIG. 22 is a diagram illustrating a state before the number of the spreading codes increases or decreases in the fourth embodiment. In the case where the number of the spreading codes is 16 before the number of the spreading codes increases or decreases, the measurement time is 2 milliseconds as illustrated in FIG. 21. Therefore, as illustrated in FIG. 22, n=16, the delay-profile measurement time t21 = 2 milliseconds, the delay-profile measurement period T21 = 50 milliseconds, and the delay-profile-measurement pause time ts21 = 18 milliseconds.

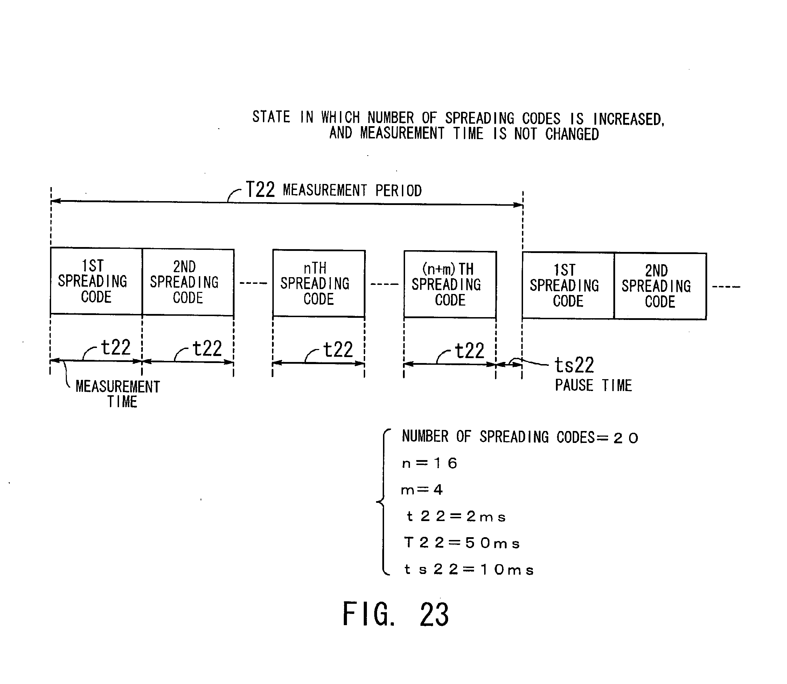

FIG. 23 is a diagram illustrating a state in the fourth embodiment in which the number of the spreading codes is increased, and the measurement time is not changed. When the spreading-code determination unit 22a-1 notifies that the number of the spreading codes is increased from 16 (as illustrated in FIG. 22) to 20, the measurement time is 2 milliseconds (according to FIG. 21). That is, the measurement time is not changed. Therefore, in this case, the communication device operates as illustrated in FIG. 23. In FIG. 23, n=16, m=4, the delay-profile measurement time t22 = 2 milliseconds, the delay-profile measurement period T22 = 50 milliseconds, and the delay-profile-measurement pause time ts22 = 10 milliseconds.

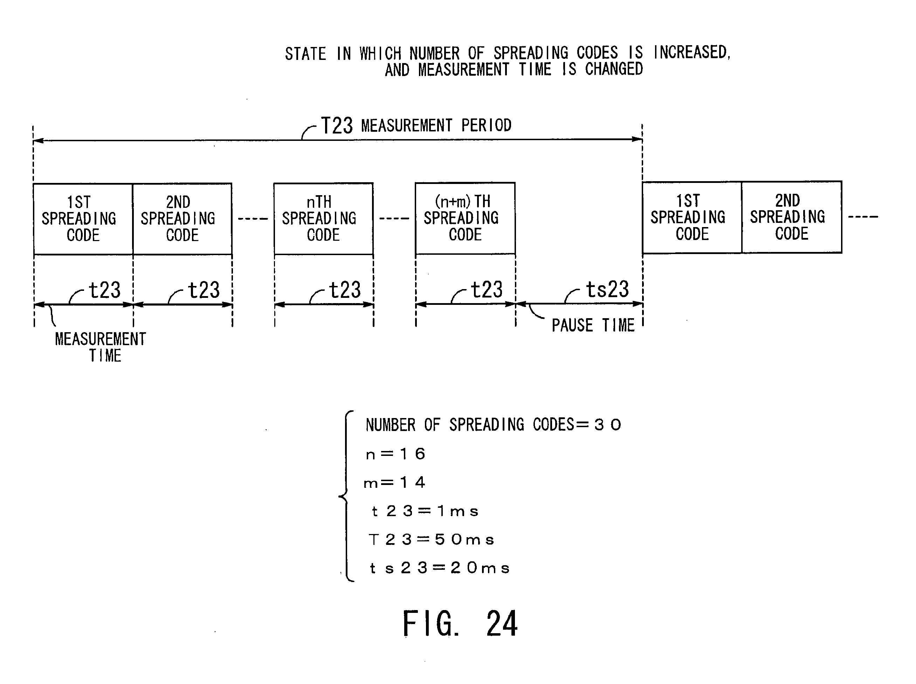

FIG. 24 is a diagram illustrating a state in the fourth embodiment in which the number of the spreading codes is increased, and the measurement time is changed. When the number of the spreading codes is increased from 16 (as illustrated in FIG. 22) to 30, the measurement time becomes 1 millisecond (according to FIG. 21). That is, the measurement time is changed. Therefore, in this case, the communication device operates as illustrated in FIG. 24. In FIG. 24, n=16, m=14, the delay-profile measurement time t23 = 1 millisecond, the delay-profile measurement period T23 = 50 milliseconds, and the delay-profile-measurement pause time ts23 = 20 milliseconds.

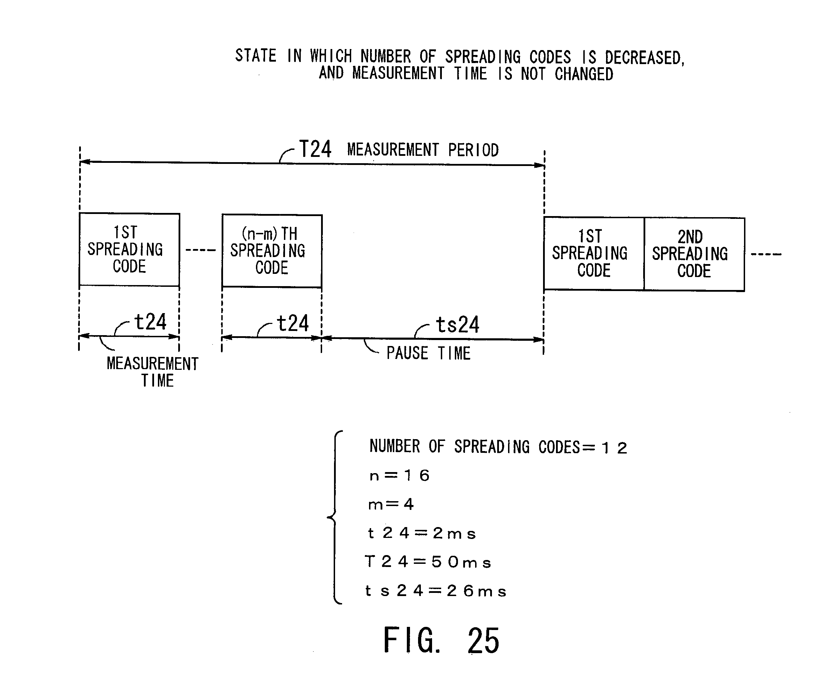

FIG. 25 is a diagram illustrating a state in the fourth embodiment in which the number of the spreading codes is decreased, and the measurement time is not changed. When the number of the spreading codes is decreased from 16 (as illustrated in FIG. 22) to 12, the measurement time is 2 milliseconds (according to FIG. 21). That is, the measurement time is not changed. Therefore, in this case, the communication device operates as illustrated in FIG. 25. In FIG. 25, n=16, m=4, the delay-profile measurement time t24 = 2 milliseconds, the delay-profile measurement period T24 = 50 milliseconds, and the delay-profile-measurement pause time ts24 = 26 milliseconds.

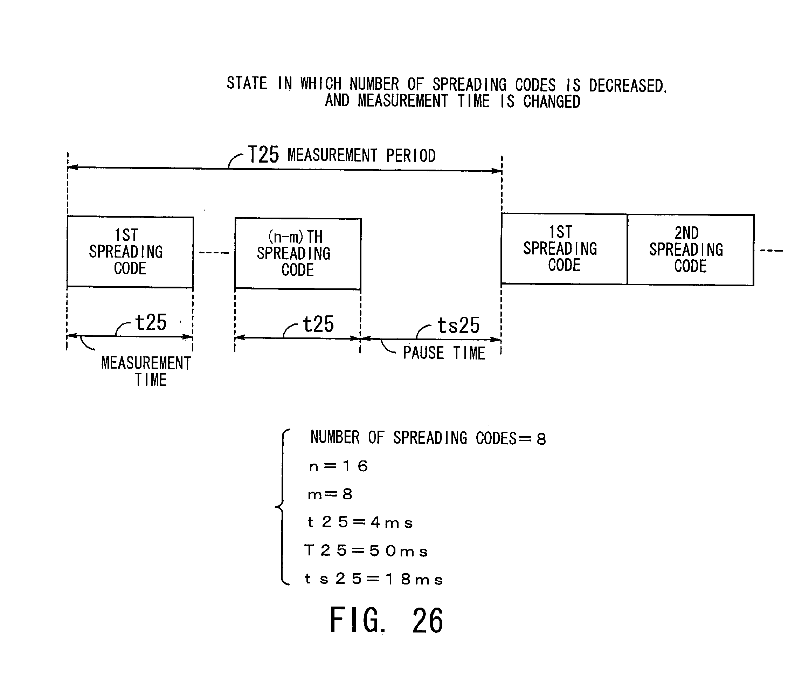

FIG. 26 is a diagram illustrating a state in the fourth embodiment in which the number of the spreading codes is decreased, and the measurement time is changed. When the number of the spreading codes is decreased from 16 (as illustrated in FIG. 22) to 8, the measurement time becomes 4 milliseconds (according to FIG. 21). That is, the measurement time is changed. Therefore, in this case, the communication device operates as illustrated in FIG. 26. In FIG. 26, n=16, m=8, the delay-profile measurement time t25 = 4 milliseconds, the delay-profile measurement period T25 = 50 milliseconds, and the delay-profile-measurement pause time ts25 = 18 milliseconds.

### [Fifth Embodiment]

A construction and operations (for performing a method for measuring delay profiles) of a communication device according to the fifth embodiment of the present invention are explained below. In the communication device according to the fifth embodiment, delay profiles are measured by changing the measurement time according to increase or decrease in the measurement period, which is determined according to reception quality.

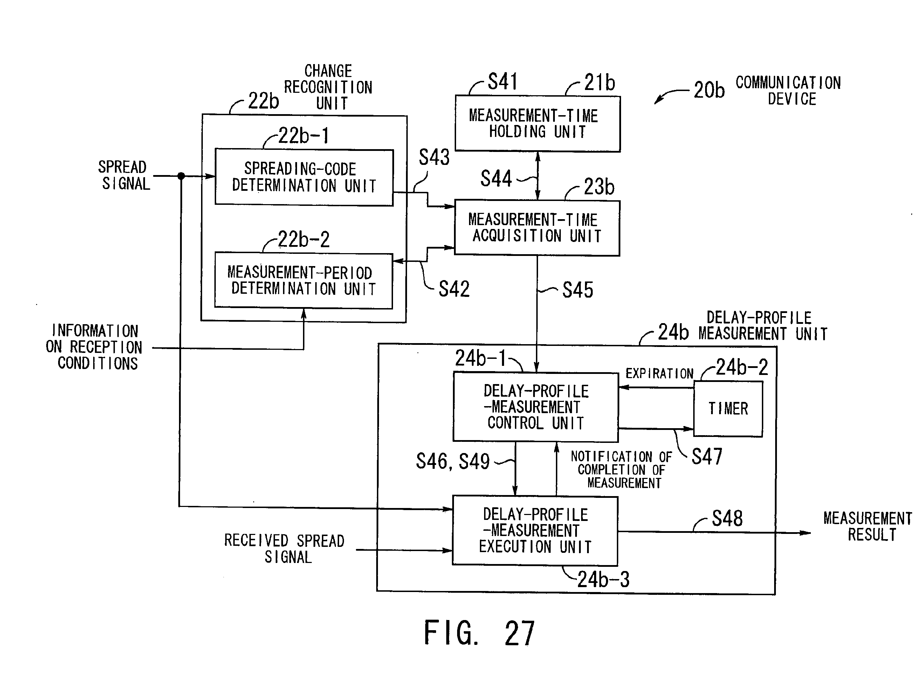

FIG. 27 is a diagram illustrating a communication device in the fifth embodiment of the present invention. The communication device 20b holds values of the measurement time in correspondence with values indicating the measurement period (for delay profile measurement), changes the measurement time in response to increase or decrease in the measurement period, and measures delay profiles, where the measurement period is determined according to reception quality.

The communication device 20b comprises a measurement-time holding unit 21b, a change recognition unit 22b, a measurement-time acquisition unit 23b, and a delay-profile measurement unit 24b. The change recognition unit 22b comprises a spreading-code determination unit 22b-1 and a measurement-period determination unit 22b-2. The delay-profile measurement unit 24b comprises a delay-profile-measurement control unit 24b-1, a timer 24b-2, and a delay-profile-measurement execution unit 24b-3.

The operations (for performing a method for measuring delay profiles) of the communication device according to the fifth embodiment are as follows.
[S41] The measurement-time holding unit 21b stores in advance applicable values of the measurement time in correspondence with all or a necessary portion of ranges of possible values of the measurement period, where the applicable values of the measurement time are obtained by experiment, simulation, or the like, and the measurement period is determined based on information on reception condition.
[S42] The measurement-period determination unit 22b-2 receives information on reception conditions, determines a value of the measurement period which enables achievement of predetermined reception quality, based on the information on reception conditions, and notifies the measurement-time acquisition unit 23b of the determined value of the measurement period.
[S43] The spreading-code determination unit 22b-1 receives spread signals, and detects spreading codes. Then, the spreading-code determination unit 22b-1 notifies the measurement-time acquisition unit 23b of the number of the spreading codes.
[S44] The measurement-time acquisition unit 23b acquires from the measurement-time holding unit 21b a value of the measurement time corresponding to the value of the measurement period of which the measurement-time acquisition unit 23b is notified in step S42.
[S45] The measurement-time acquisition unit 23b notifies the delay-profile measurement unit 24b of the value of the measurement time acquired in step S44, the number of the spreading codes of which the measurement-time acquisition unit 23b is notified in step S43, and the value of the measurement period of which the measurement-time acquisition unit 23b is notified in step S42.
[S46] When the delay-profile-measurement control unit 24b-1 receives a notification of completion of a measurement, which is sent from the delay-profile-measurement execution unit 24b-3, the delay-profile-measurement control unit 24b-1 notifies the delay-profile-measurement execution unit 24b-3 of the number of the spreading codes and the value of the measurement time of which the delay-profile measurement unit 24b is notified in step S45, and makes the delay-profile-measurement execution unit 24b-3 start measurement.
[S47] At the same time as the operations in step S46, the delay-profile-measurement control unit 24b-1 notifies the timer 24b-2 of the value of the measurement period of which the delay-profile measurement unit 24b is notified in step S45, and makes the timer 24b-2 start counting the measurement period based on the above value.
[S48] The delay-profile-measurement execution unit 24b-3 performs measurement of delay profiles of received spread signals based on the spreading codes corresponding to the number of which the delay-profile-measurement execution unit 24b-3 is notified in step S46. When the measurement of delay profiles is completed, the delay-profile-measurement execution unit 24b-3 outputs results of the measurement of the delay profiles, and sends a notification of the completion of the measurement to the delay-profile-measurement control unit 24b-1.
[S49] When the delay-profile-measurement control unit 24b-1 receives the notification of completion of the measurement and a notification of expiration of the measurement period from the timer 24b-2, the delay-profile-measurement control unit 24b-1 makes the delay-profile-measurement execution unit 24b-3 start measurement again.

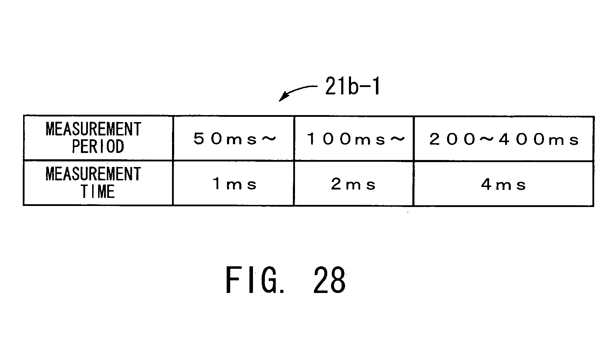

Next, relationships among the measurement time, the measurement period, and the pause time are explained in detail below with reference to FIGS. 28 to 33, which illustrate concrete examples.

FIG. 28 is a diagram illustrating a management table in the fifth embodiment. The management table 21b-1 is a table which is held in the measurement-time holding unit 21b, and indicates correspondences between the possible values of the measurement period and the applicable values of the measurement time. In the example of FIG. 28, the applicable values of the measurement time are determined in advance under the condition that the measurement period determined based on information reception conditions is in the range from 50 to 400 milliseconds, and the maximum number of the spreading codes is 48.

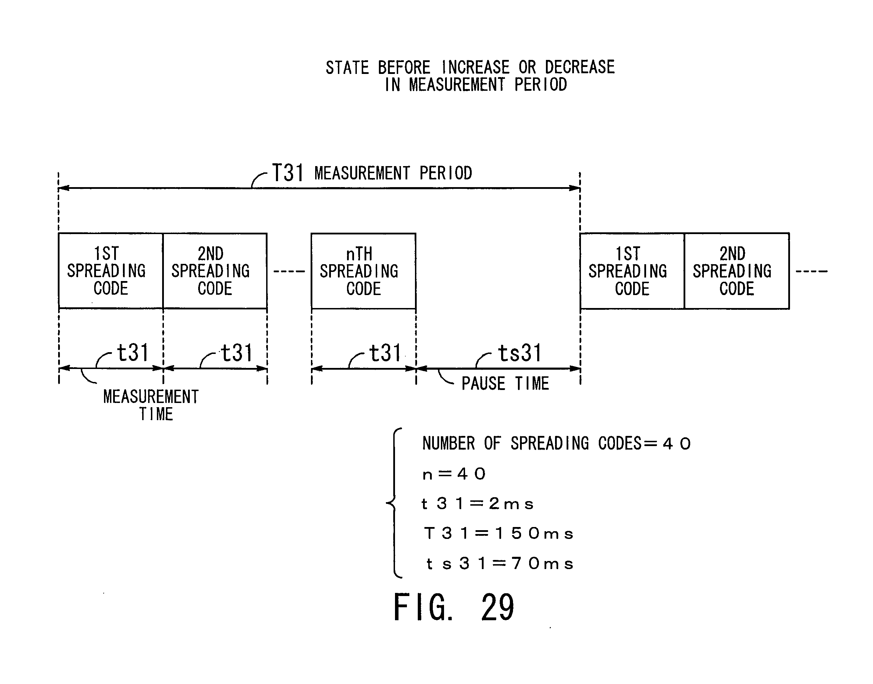

FIG. 29 is a diagram illustrating a state before the measurement period increases or decreases in the fifth embodiment. In the case where the measurement period is 150 milliseconds before the measurement period increases or decreases, the measurement time becomes 2 milliseconds according to FIG. 28. Therefore, when the number of the spreading codes is determined to be 40 by the spreading-code determination unit 22b-1 in FIG. 27, as illustrated in FIG. 29, n=40, the delay-profile measurement time t31 = 2 milliseconds, the delay-profile measurement period T31 = 150 milliseconds, and the delay-profile-measurement pause time ts31 = 70 milliseconds.

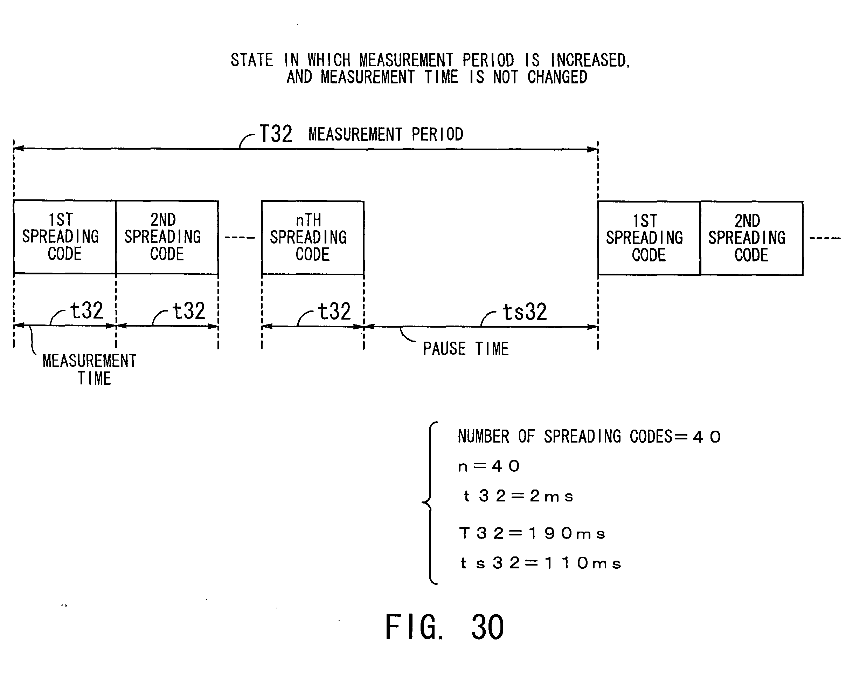

FIG. 30 is a diagram illustrating a state in the fifth embodiment in which the measurement period is increased, and the measurement time is not changed. When the measurement period is increased from 150 milliseconds (as illustrated in FIG. 29) to 190 milliseconds, the measurement time is 2 milliseconds (according to FIG. 28). That is, the measurement time is not changed. Therefore, in this case, the communication device operates as illustrated in FIG. 30. In FIG. 30, n=40, the delay-profile measurement time t32 = 2 milliseconds, the delay-profile measurement period T32 = 190 milliseconds, and the delay-profile-measurement pause time ts32 = 110 milliseconds.

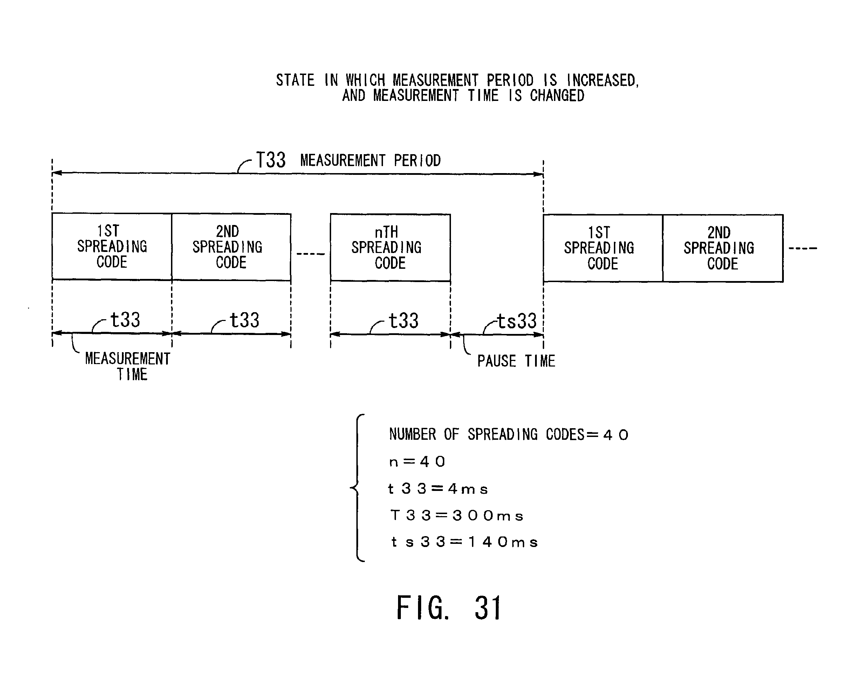

FIG. 31 is a diagram illustrating a state in the fifth embodiment in which the measurement period is increased, and the measurement time is changed. When the measurement period is increased from 150 milliseconds (as illustrated in FIG. 29) to 300 milliseconds, the measurement time becomes 4 milliseconds (according to FIG. 28). That is, the measurement time is changed. Therefore, in this case, the communication device operates as illustrated in FIG. 31. In FIG. 31, n=40, the delay-profile measurement time t33 = 4 milliseconds, the delay-profile measurement period T33 = 300 milliseconds, and the delay-profile-measurement pause time ts33 = 140 milliseconds.

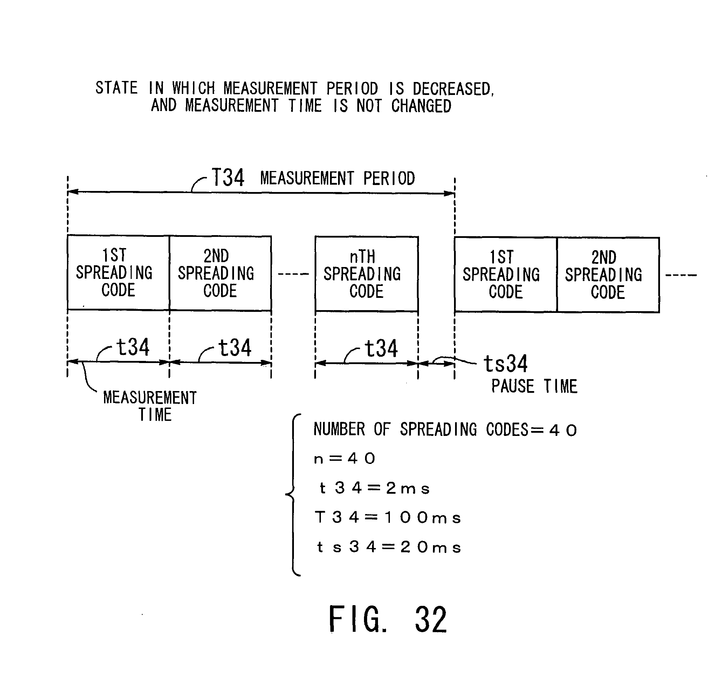

FIG. 32 is a diagram illustrating a state in the fifth embodiment in which the measurement period is decreased, and the measurement time is not changed. When the measurement period is decreased from 150 milliseconds (as illustrated in FIG. 29) to 100 milliseconds, the measurement time is 2 milliseconds (according to FIG. 28). That is, the measurement time is not changed. Therefore, in this case, the communication device operates as illustrated in FIG. 32. In FIG. 32, n=40, the delay-profile measurement time t34 = 2 milliseconds, the delay-profile measurement period T34 = 100 milliseconds, and the delay-profile-measurement pause time ts34 = 20 milliseconds.

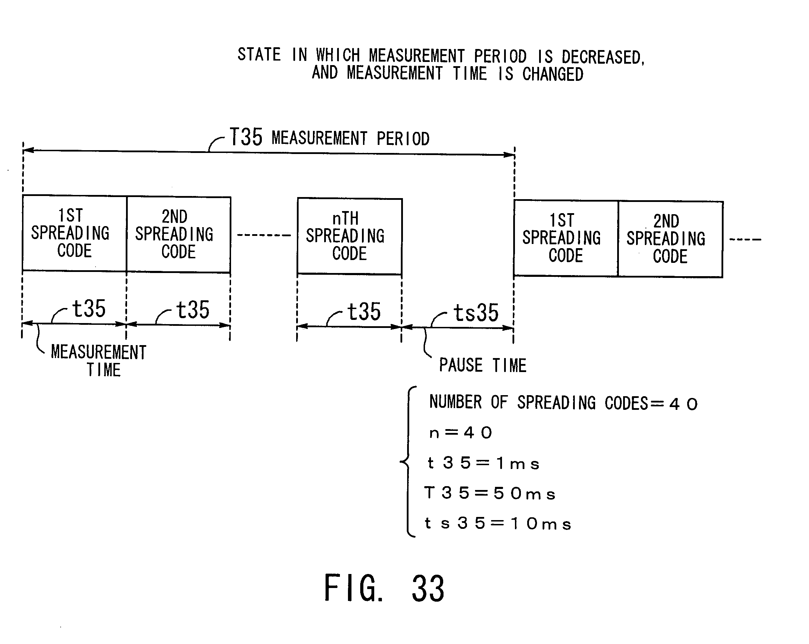

FIG. 33 is a diagram illustrating a state in the fifth embodiment in which the measurement period is decreased, and the measurement time is changed. When the measurement period is decreased from 150 milliseconds (as illustrated in FIG. 29) to 50 milliseconds, the measurement time becomes 1 millisecond (according to FIG. 28). That is, the measurement time is changed. Therefore, in this case, the communication device operates as illustrated in FIG. 33. In FIG. 33, n=40, the delay-profile measurement time t35 = 1 millisecond, the delay-profile measurement period T35 = 50 milliseconds, and the delay-profile-measurement pause time ts35 = 10 milliseconds.

### [Sixth Embodiment]

A construction and operations (for performing a method for measuring delay profiles) of a communication device according to the sixth embodiment of the present invention are explained below. In the communication device according to the sixth embodiment, delay profiles are measured by changing the measurement time according to increase or decrease in at least one of the number of spreading codes and the measurement period, which is determined based on information on reception conditions.

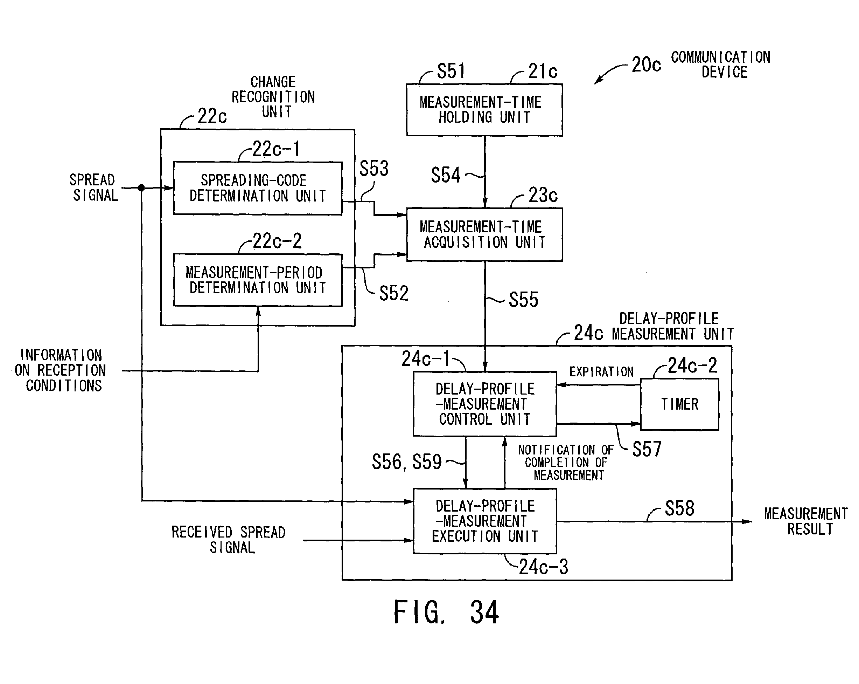

FIG. 34 is a diagram illustrating a communication device in the sixth embodiment of the present invention. The communication device 20c holds values of the measurement time in correspondence with combinations of values of the number of spreading codes (with which delay profiles are measured) and values of the measurement period (for delay profile measurement), changes the measurement time in response to increase or decrease in at least one of the number of spreading codes and the measurement period, and measures delay profiles, where the measurement period is determined based on information on reception conditions.

The communication device 20c comprises a measurement-time holding unit 21c, a change recognition unit 22c, a measurement-time acquisition unit 23c, and a delay-profile measurement unit 24c. The change recognition unit 22c comprises a spreading-code determination unit 22c-1 and a measurement-period determination unit 22c-2. The delay-profile measurement unit 24c comprises a delay-profile-measurement control unit 24c-1, a timer 24c-2, and a delay-profile-measurement execution unit 24c-3.

The operations (for performing a method for measuring delay profiles) of the communication device according to the sixth embodiment are as follows.
[S51] The measurement-time holding unit 21c stores in advance applicable values of the measurement time in correspondence with all or necessary combinations of ranges of possible values of the number of spreading codes (with which delay profiles are measured) and ranges of possible values of the measurement period (for delay profile measurement), where the applicable values of the measurement time are obtained by experiment, simulation, or the like, and the measurement period is determined based on information on reception conditions.
[S52] The measurement-period determination unit 22c-2 receives information on the reception conditions, determines a value of the measurement period which enables achievement of predetermined reception quality, and notifies the measurement-time acquisition unit 23c of the determined value of the measurement period.
[S53] The spreading-code determination unit 22c-1 receives spread signals, and detects spreading codes. Then, the spreading-code determination unit 22c-1 notifies the measurement-time acquisition unit 23c of the number of the spreading codes.
[S54] The measurement-time acquisition unit 23c acquires from the measurement-time holding unit 21c a value of the measurement time corresponding to the combination of the value of the measurement period and the number of the spreading codes of which the measurement-time acquisition unit 23c is notified in steps S52 and S53.
[S55] The measurement-time acquisition unit 23c notifies the delay-profile measurement unit 24c of the value of the measurement time acquired in step S54, the number of the spreading codes of which the measurement-time acquisition unit 23c is notified in step S53, and the value of the measurement period of which the measurement-time acquisition unit 23c is notified in step S52.
[S56] When the delay-profile-measurement control unit 24c-1 receives a notification of completion of a measurement, which is sent from the delay-profile-measurement execution unit 24c-3, the delay-profile-measurement control unit 24c-1 notifies the delay-profile-measurement execution unit 24c-3 of the number of the spreading codes and the value of the measurement time of which the delay-profile measurement unit 24c is notified in step S55, and makes the delay-profile-measurement execution unit 24c-3 start measurement.
[S57] At the same time as the operations in step S56, the delay-profile-measurement control unit 24c-1 notifies the timer 24c-2 of the value of the measurement period of which the delay-profile measurement unit 24c is notified in step S55, and makes the timer 24c-2 start counting the measurement period based on the above value.
[S58] The delay-profile-measurement execution unit 24c-3 performs measurement of delay profiles of received spread signals based on the spreading codes corresponding to the number of which the delay-profile-measurement execution unit 24c-3 is notified in step S56. When the measurement of delay profiles is completed, the delay-profile-measurement execution unit 24c-3 outputs results of the measurement of the delay profiles, and sends a notification of the completion of the measurement to the delay-profile-measurement control unit 24c-1.
[S59] When the delay-profile-measurement control unit 24c-1 receives the notification of completion of the measurement and a notification of expiration of the measurement period from the timer 24c-2, the delay-profile-measurement control unit 24c-1 makes the delay-profile-measurement execution unit 24c-3 start measurement again.

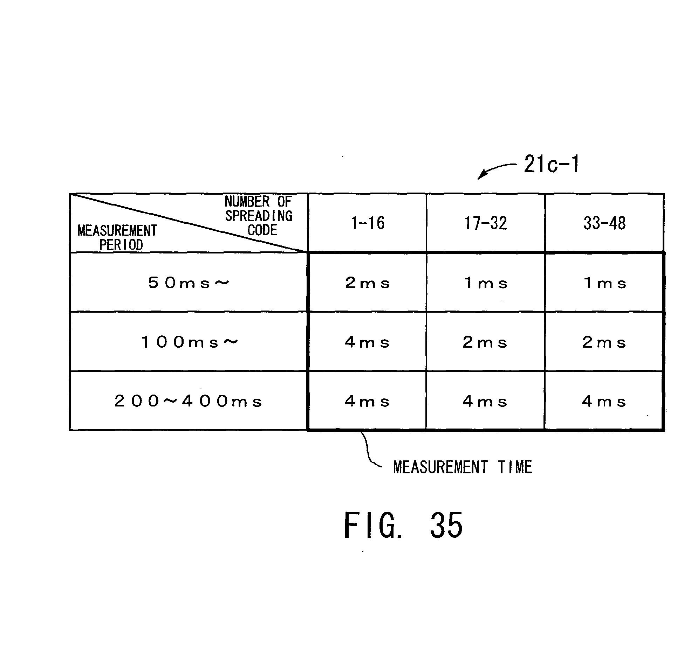

FIG. 35 is a diagram illustrating a management table in the sixth embodiment. The management table 21c-1 is a table which is held in the measurement-time holding unit 21c, and indicates correspondences between the applicable values of the measurement time and combinations of the possible values of the number of the spreading codes and the possible values of the measurement period. In the example of FIG. 35, the applicable values of the measurement time are determined in advance under the condition that the number of the spreading codes is in the range from 1 to 48, and the measurement period determined based on information reception conditions is in the range from 50 to 400 milliseconds.

Further, relationships among the measurement time, the measurement period, and the pause time in the sixth embodiment are obtained based on the above management table in a similar manner to the fourth and fifth embodiments. Therefore, the explanations on the relationships among the measurement time, the measurement period, and the pause time are not repeated.

As explained above, according to the present invention, values of the measurement time are prepared in advance in correspondence with ranges of possible values of the number of spreading codes with which delay profiles are to be measured, or ranges of possible values of the measurement period, which is determined based on information on reception conditions. Therefore, it is possible to immediately change the measurement time when the number of spreading codes or the measurement period increases or decreases. Thus, it is possible to flexibly set times for use in the delay profile measurement, and flexibly change the time utilization rate in a circuit for measuring a delay profile when necessary, where the time utilization rate is determined by, for example, a measurement period, a measurement time, a pause time, and the like. Consequently, the transmission quality can be improved.

In addition, it is unnecessary to provide a circuit for calculating a value to which the measurement time is changed when the change of the measurement time becomes necessary. Therefore, the circuit construction can be simplified, and the size of the communication device can be reduced.

As explained before, the communication device according to the present invention is arranged to have such a construction as to hold values of the measurement period (for delay profile measurement) in correspondence with values indicating one or a combination of a wireless condition and a service quality level, and performs measurement of delay profiles based on a value of the measurement period corresponding to a value indicating one or a combination of the wireless condition and the service quality level. Therefore, the communication device according to the present invention can change the measurement period to an appropriate value for delay profile measurement, according to measurement conditions. Thus, the transmission quality can be improved.

The foregoing is considered as illustrative only of the principle of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A communication device for performing wireless communication, comprising:
a measurement-period holding unit which holds for measurement of delay profiles values of a measurement period in correspondence with values indicating one or a combination of a wireless condition or a service quality level;
a change recognition unit which recognizes a change in at least one of the wireless condition and the service quality level, and notifies a measurement-period acquisition unit of the change;
said measurement-period acquisition unit which acquires from said measurement-period holding unit a value of the measurement period corresponding to said change of which the measurement-period acquisition unit is notified by the change recognition unit; and
a delay-profile measurement unit which repeats the measurement of the delay profiles with the measurement period determined by said value acquired by the said measurement-period acquisition unit during a time which is necessary and appropriate for the measurement.

2. The communication device according to claim 1, wherein said measurement-period holding unit holds for the measurement of the delay profiles values of the measurement period in correspondence with values indicating the number of spreading codes with which the delay profiles are to be measured, as said wireless condition, and said change recognition unit recognizes increase or decrease in the number of spreading codes as a change in the wireless condition.

3. The communication device according to claim 1, wherein said measurement-period holding unit holds for the measurement of the delay profiles values of the measurement period in correspondence with values indicating the measurement time as information indicating said service quality level, the measurement time is determined for the measurement of the delay profiles according to reception quality, and said change recognition unit recognizes increase or decrease in the measurement time as a change in the service quality level.

4. The communication device according to claim 1, wherein said measurement-period holding unit holds for the measurement of the delay profiles values of the measurement period in correspondence with combinations of values of the number of spreading codes with which the delay profiles are to be measured and values of a measurement time which is determined for the measurement of the delay profiles according to reception quality, as combinations of said wireless condition and said service quality level, and said change recognition unit recognizes increase or decrease in at least one of the number of spreading codes and the measurement time as said change in at least one of the wireless condition and the service quality level.

5. A communication device for performing wireless communication, comprising:
a measurement-time holding unit which holds for measurement of delay profiles values of a measurement time in correspondence with values indicating one or a combination of a wireless condition or a service quality level;
a change recognition unit which recognizes a change in at least one of the wireless condition and the service quality level, and notifies a measurement-time acquisition unit of the change;
said measurement-time acquisition unit which acquires from said measurement-period holding unit a value of the measurement time corresponding to said change of which the measurement-time acquisition unit is notified by the change recognition unit; and
a delay-profile measurement unit which performs the measurement of the delay profiles for the measurement time determined by said value acquired by the said measurement-time acquisition unit, within a time which is necessary and appropriate for the measurement.

6. The communication device according to claim 5, wherein said measurement-time holding unit holds for the measurement of the delay profiles values of the measurement time in correspondence with values indicating the number of spreading codes with which the delay profiles are to be measured, as said wireless condition, and said change recognition unit recognizes increase or decrease in the number of spreading codes as a change in the wireless condition.

7. The communication device according to claim 5, wherein said measurement-time holding unit holds for the measurement of the delay profiles values of the measurement time in correspondence with values indicating the measurement period as said service quality level, the measurement period is determined for the measurement of the delay profiles according to reception quality, and said change recognition unit recognizes increase or decrease in the measurement period as a change in the service quality level.

8. The communication device according to claim 5, wherein said measurement-time holding unit holds for the measurement of the delay profiles values of the measurement time in correspondence with combinations of values of the number of spreading codes with which the delay profiles are to be measured and values of a measurement period which is determined for the measurement of the delay profiles according to reception quality, as combinations of said wireless condition and said service quality level, and said change recognition unit recognizes increase or decrease in at least one of the number of spreading codes and the measurement period as said change in at least one of the wireless condition and the service quality level.

9. A method for measuring delay profiles, comprising the steps of:
(a) holding for measurement of the delay profiles values of a measurement period in correspondence with values indicating one or a combination of the number of spreading codes with which the delay profiles are to be measured and a measurement time which is determined for the measurement of the delay profiles according to reception quality;
(b) recognizing a change in at least one of the number of spreading codes and the measurement time;
(c) changing said measurement period according to said change; and
(d) repeating the measurement of the delay profiles with the changed measurement period within a time which is necessary and appropriate for the measurement.

10. A method for measuring delay profiles, comprising the steps of:
(a) holding for measurement of the delay profiles values of a measurement time in correspondence with values indicating one or a combination of the number of spreading codes with which the delay profiles are to be measured and a measurement period which is determined for the measurement of the delay profiles according to reception quality;
(b) recognizing a change in at least one of the number of spreading codes and the measurement period;
(c) changing said measurement time according to said change; and
(d) performing the measurement of the delay profiles with the changed measurement time within a time which is necessary and appropriate for the measurement.

11. A receiver receiving spread-spectrum wireless signals, and having a function of generating, as information on delay profiles, information on correlation between received signals and spreading codes for detection of timings of delayed waves, wherein:
when there are a plurality of spreading codes with which the information on the delay profiles is to be generated, said function sets each of the plurality of spreading codes in succession in a correlation detection unit which is provided for measuring the correlations, and detection of the correlations with each of the plurality of spreading codes is repeated with a predetermined period; and
said receiver comprises an updating unit which increases said predetermined period when the number of the plurality of spreading codes increases, or when a measurement time in which each of the correlations is measured with each of the plurality of spreading codes increases.

12. A receiver for receiving spread-spectrum wireless signals, and generating delay profiles which indicate timings of delayed portions of the spread-spectrum wireless signals, comprising:
a correlation detection unit which holds in succession each of a plurality of spreading codes which are used for generating the delay profiles, obtains correlations between the spread-spectrum wireless signals and the plurality of spreading codes by measurement repeated with a measurement period which is predetermined for each of the plurality of spreading codes, and generates the delay profiles based on the correlations; and
a measurement-period change unit which increases said measurement period when the number of the plurality of spreading codes increases, or when a measurement time in which each of the correlations is obtained by measurement with each of the plurality of spreading codes increases.
